# EUROPEAN PATENT APPLICATION

(11) **EP 4 574 386 A1**
(43) Date of publication of application: **25.06.2025**
(21) Application number: 23913949.6
(22) Date of filing: 03.01.2023
(51) Int. Cl.: B29C 43/24

(54) **CALENDERING DEVICE, ELECTRODE PROCESSING APPARATUS, AND BATTERY PROCESSING APPARATUS**

(71) Applicant: Contemporary Amperex Technology (Hong Kong) Limited, Central (HK)
(72) Inventor: YAO, Mingchen, Ningde City, Fujian 352100 (CN); WU, Bingzhao, Ningde City, Fujian 352100 (CN); LIN, Jiang, Ningde City, Fujian 352100 (CN); LIAO, Ruhu, Ningde City, Fujian 352100 (CN); WEI, Jingjing, Ningde City, Fujian 352100 (CN)
(74) Representative: Kraus & Lederer PartGmbB
(86) International application number: PCT/CN2023/070226
(87) International publication number: WO 2024/145789

(57) **Abstract**

A pressing apparatus (100), electrode plate processing equipment (1000), and battery processing equipment are disclosed. The battery processing equipment includes the electrode plate processing equipment (1000) and shaping equipment (2000). The electrode plate processing equipment (1000) includes the pressing apparatus (100). The pressing apparatus (100) includes a first pressing piece (10) with a first surface (101) and a second pressing piece (20) with a second surface (201). The first surface (101) and the second surface (201) are configured to coordinate to press a target piece (C). The first surface (101) and/or the second surface (201) are provided with a clearance groove (40). The clearance groove (40) provides a clearance for a part of the separator (B), so that the separator (B) is still sticky during shaping, thereby alleviating the problem of inferior adhesion in the electrode assembly.

## Description

### TECHNICAL FIELD

This application relates to the technical field of battery processing, and in particular, to a pressing apparatus, electrode plate processing equipment, and battery processing equipment.

### BACKGROUND

During processing of a battery, electrode plates and a separator of the battery typically need to be stacked first and then pressed to form a composite electrode plate. The composite electrode plate is shaped by winding or stacking to form an electrode assembly.

However, in some cases, the pressing operation on the electrode plates and the separator is prone to cause inferior shaping adhesion, thereby deteriorating the quality of the electrode assembly.

### TECHNICAL PROBLEMS

One of objectives of some embodiments of this application is to provide a pressing apparatus, electrode plate processing equipment, and battery processing equipment to alleviate the problem of inferior shaping adhesion.

### TECHNICAL SOLUTIONS

A technical solution disclosed in an embodiment of this application is as follows:
According to a first aspect, this application provides a pressing apparatus, including:
a first pressing piece with a first surface; and
a second pressing piece with a second surface, where the first surface and the second surface are configured to coordinate to press a target piece, and the first surface and/or the second surface are provided with a clearance groove.

With the above technical solution, when the first surface and the second surface coordinate to press the target piece, the target piece can directly face the clearance groove. In this way, with the clearance groove provided, the pressing apparatus provides a clearance for a part of the target piece, and accordingly, the pressing apparatus can apply a pressing action to a part of the target piece. This arrangement can reduce the damage to the target piece caused by the pressing apparatus, thereby alleviating the problem of inferior shaping adhesion of the target piece.

In some embodiments, the first surface is a flat surface or a cylindrical surface, and the second surface is a flat surface or a cylindrical surface.

With the above technical solution, the first pressing piece and the second pressing piece can press the target piece in diverse manners, so that the first pressing piece and the second pressing piece can be designed flexibly.

In some embodiments, a groove wall of the clearance groove transitions to the first surface by way of a circular arc, and/or a groove wall of the clearance groove transitions to the second surface by way of a circular arc.

The above technical solution can alleviate the problem that the target piece is damaged by puncturing, so that the target piece can be conveyed and pressed smoothly.

In some embodiments, the first surface is provided with a plurality of the clearance grooves spaced apart, and/or the second surface is provided with a plurality of the clearance grooves spaced apart.

With the above technical solution, by performing just simple operations on the first pressing piece and/or the second pressing piece, the pressing apparatus can provide a clearance for a part of the separator effectively and press a part of the separator, thereby alleviating the problem of decreased shaping adhesion of the separator and the problem of crushing of the separator.

In some embodiments, the plurality of clearance grooves on the first surface and/or the second surface are evenly distributed.

With the above technical solution, when the pressing apparatus is used to press the separator and the electrode plate, the pressing apparatus can press a plurality of evenly distributed parts of the separator so that the separator possesses relatively strong laminating adhesion. In addition, a plurality of evenly distributed parts of the separator are sheltered in the clearance from being pressed, by which the separator possesses relatively strong shaping adhesion.

In some embodiments, center points of the plurality of clearance grooves on the first surface and/or the second surface are connectible to form a grid structure. A minimum grid cell of the grid structure is an equilateral triangle.

With the above technical solution, the sheltered parts of the target piece are distributed densely and evenly along both the direction Y and the conveyance direction of the target piece, so that the separator possesses relatively strong laminating adhesion and shaping adhesion.

In some embodiments, the clearance groove includes a plurality of first grooves and a plurality of second grooves. Two adjacent first grooves communicate with each other through the second groove.

The above technical solution makes the molding process of the first pressing piece and/or the second pressing piece very flexible and easy to implement.

In some embodiments, a contour of the clearance groove on the first surface and/or the second surface is circular, elliptical, or square.

The above technical solution makes the design of the clearance groove very flexible and easy to implement.

In some embodiments, the clearance groove satisfies: a ratio of an area of a part, directly facing the clearance groove, of the target piece to an area of the target piece falls within a range of 30% to 40%.

With the above technical solution, the laminating adhesion of the separator can meet the requirement of firm bonding of the composite electrode plate, and the shaping adhesion of the separator can meet the requirement of firm bonding of the electrode assembly, thereby improving the quality of the electrode assembly.

In some embodiments, the clearance groove is disposed on the first surface. A ratio of a first area of the clearance groove on the first surface to a second area falls within a range of 30% to 40%, where the second area is a sum of the first area and an area of the first surface.

With the above technical solution, a clearance area percentage of the target piece is 30% to 40%. In this way, when the pressing apparatus is used to press the separator and the electrode plate, the separator possesses relatively strong laminating adhesion and shaping adhesion, thereby alleviating the problem of inferior shaping adhesion and improving the quality of the electrode assembly.

In some embodiments, a depth of the clearance groove is greater than 40 µm.

With the above technical solution, the separator is relatively capable of being laminated with the electrode plate to form a composite electrode, that is, the separator is relatively capable of being laminated, so that the composite electrode plate is of relatively high quality.

In some embodiments, a depth of the clearance groove is greater than 100 µm.

The above technical solution makes the composite electrode plate be in a good state of firm bonding, thereby meeting the quality requirement of the composite electrode plate.

In some embodiments, both the first pressing piece and the second pressing piece are provided with the clearance groove, and a pressing position located on the target piece and corresponding to the clearance groove of the first pressing piece is staggered from a pressing position located on the target piece and corresponding to the clearance groove of the second pressing piece.

The above technical solution can simplify the preparation process of the first pressing piece and the second pressing piece. In addition, by designing clearances on the first pressing piece and the second pressing piece simultaneously, the mass difference between the first pressing piece and the second pressing piece is prevented from being excessively large, thereby making it convenient for the first pressing piece and the second pressing piece to jointly press the target piece effectively and stably.

In some embodiments, the first pressing piece and/or the second pressing piece is a pressure roller rotatable around a rotation axis of the roller, and an outer peripheral surface of the pressure roller is provided with the clearance groove.

The above technical solution achieves a desired rolling effect for the target piece, and enables the target piece to be rolled by the first pressing piece and the second pressing piece while being conveyed, so that the efficiency of the pressing apparatus in rolling the target piece is relatively high.

In some embodiments, the pressing apparatus further includes a cleaning assembly. The cleaning assembly is configured to clean the pressure roller.

With the above technical solution, the residues on the pressure roller can be cleaned off, thereby alleviating the problem that the residues left when the pressure roller rolls the target piece cause damage to the target piece.

In some embodiments, the cleaning assembly includes:
a dust suction box, provided with a receptacle, a dust suction bin, and a dust suction port communicating with the receptacle and the dust suction bin; and
a sweeping piece, mounted in the receptacle, where a part of the sweeping piece is exposed outside the receptacle and is able to elastically abut against and frictionally contact the outer peripheral surface of the pressure roller when the pressure roller rotates.

The dust suction box is configured to be connected to an external air drawing apparatus to allow a residue on the sweeping piece to enter the dust suction bin through the dust suction port under an action of the air drawing apparatus.

With the above technical solution, when the pressure roller presses the target piece, the sweeping piece sweeps the residue off the pressure roller, and the air drawing apparatus can draw the residues swept off by the sweeping piece into the dust suction bin or the air drawing apparatus, thereby implementing real-time cleaning of the pressure roller to alleviate the problem that the residues cause damage to the target piece.

In some embodiments, the sweeping piece is rotatable. A rotation axis of the sweeping piece is parallel to the rotation axis of the pressure roller.

With the above technical solution, the sweeping piece can rotate relative to the pressure roller, and the rotation axis of the sweeping piece is parallel to the rotation axis of the pressure roller. In this way, the sweeping piece can elastically abut against and frictionally contact different positions on the outer peripheral surface of the pressure roller in sequence to sweep the residues off the pressure roller.

In some embodiments, the cleaning assembly further includes a scraper disposed in the receptacle. The scraper is configured to scrape the residue off the sweeping piece when the sweeping piece rotates.

With the above technical solution, during the rotation of the sweeping piece, the sweeping piece moves relative to the scraper. In this way, the scraper can scrape the residues off the sweeping piece, thereby alleviating the problem that the residues on the sweeping piece cause damage to the target piece when the pressure roller rolls the target piece.

In some embodiments, the pressing apparatus further includes a dust sticking assembly. The dust sticking assembly includes a rotatable first dust sticking roller. A rotation axis of the first dust sticking roller is parallel to the rotation axis of the pressure roller. An outer peripheral surface of the first dust sticking roller contacts the outer peripheral surface of the pressure roller and is able to stick to and remove a residue from the pressure roller during rotation.

With the above technical solution, the first dust sticking roller can rotate in an opposite direction to the pressure roller, so as to stick to and remove the residue on the pressure roller, and in turn, alleviate the problem that the residues on the pressure roller cause damage to the target piece.

In some embodiments, the dust sticking assembly further includes a rotatable second dust sticking roller. A rotation axis of the second dust sticking roller is parallel to the rotation axis of the first dust sticking roller. An outer peripheral surface of the second dust sticking roller contacts the outer peripheral surface of the first dust sticking roller and is able to stick to and remove the residue from the first dust sticking roller during rotation.

With the above technical solution, the second dust sticking roller can stick to and remove the residue on the outer peripheral surface of the first dust sticking roller, thereby making it convenient for the first dust sticking roller to continuously remove the residues on the outer peripheral surface of the pressure roller effectively.

In some embodiments, the pressing apparatus includes a cleaning assembly. The cleaning assembly is configured to clean the pressure roller. The dust sticking assembly and the cleaning assembly are distributed in sequence along a rotation path of the pressure roller.

The above technical solution improves the effect of cleaning the pressure roller, and alleviates the problem that the target piece C is damaged by the residues on the pressure roller.

According to a second aspect, this application provides a piece of electrode plate processing equipment. The equipment includes the pressing apparatus, and the pressing apparatus is configured to press an electrode plate and a separator.

With the above technical solution, when the pressing apparatus presses the electrode plate and the separator to form a composite electrode plate, the clearance groove of the pressing apparatus can provide a clearance for a part of the separator, thereby alleviating the damage caused to the separator by the pressing apparatus. In this way, when the separator is subjected to a pressing action, the sheltered parts of the separator can retain adhesion and serve a sticking function in the subsequent shaping operation, thereby alleviating the problem of inferior adhesion of the electrode assembly, and improving the quality of the electrode assembly.

In some embodiments, the electrode plate processing equipment further includes a heating apparatus. The heating apparatus is configured to heat the electrode plate and the separator. The pressing apparatus is configured to press the heated electrode plate and separator.

With the above technical solution, the electrode plate and the separator are heated first by the heating apparatus and then partially pressed by the pressing apparatus, so that the electrode plate and the separator can be laminated to form a composite electrode plate, and the composite electrode plate is in a good state of firm bonding.

According to a third aspect, a piece of battery processing equipment is provided, including:
electrode plate processing equipment, configured to press an electrode plate and the separator to form a composite electrode plate; and
shaping equipment, configured to shape the composite electrode plate to form an electrode assembly.

With the above technical solution, when the pressing apparatus presses the electrode plate and the separator to form a composite electrode plate, the clearance groove of the pressing apparatus can provide a clearance for a part of the separator, thereby alleviating the damage caused to the separator by the pressing apparatus. In this way, when the separator is subjected to a pressing action, the sheltered parts of the separator can retain adhesion and serve a sticking function in the shaping operation, thereby alleviating the problem of inferior adhesion of the electrode assembly, and improving the quality of the electrode assembly.

### BRIEF DESCRIPTION OF DRAWINGS

To describe the technical solutions in some embodiments of this application more clearly, the following outlines the drawings to be used in the description of some exemplary embodiments of this application. Evidently, the drawings outlined below are merely some embodiments of this application. A person of ordinary skill in the art may derive other drawings from such drawings without making any creative efforts.
FIG. 1 is a schematic diagram of rolling an electrode plate and a separator in some scenarios;
FIG. 2 is a three-dimensional schematic diagram of a pressing apparatus in coordination with a target piece according to some embodiments of this application;
FIG. 3 is top view of FIG. 2;
FIG. 4 is a cross-sectional view of FIG. 3 sectioned along an A-A line;
FIG. 5 is a schematic diagram of a pressing apparatus shown in FIG. 4;
FIG. 6 is a schematic diagram of coordination between a first pressing piece and a second pressing piece according to some other embodiments of this application;
FIG. 7 is a schematic diagram of coordination between a first pressing piece and a second pressing piece according to still some other embodiments of this application;
FIG. 8 is a schematic diagram of a first pressing piece according to some other embodiments of this application;
FIG. 9 is a schematic diagram of a second pressing piece according to some other embodiments of this application;
FIG. 10 is a schematic partial view of a first pressing piece according to some embodiments of this application;
FIG. 11 is a close-up view of a part B shown in FIG. 3;
FIG. 12 is a schematic diagram of a grid structure formed by connecting clearance grooves on a first pressing piece shown in FIG. 11;
FIG. 13 is a top view of a first pressing piece according to still some other embodiments of this application;
FIG. 14 is a side view of a first pressing piece according to still some other embodiments of this application;
FIG. 15 is a graph of a relationship of a clearance area percentage of a separator to laminating adhesion and shaping adhesion separately;
FIG. 16 is a schematic diagram of coordination between a first pressing piece and a second pressing piece according to yet some other embodiments of this application;
FIG. 17 is a graph of a relationship between a depth of a clearance groove and laminating adhesion of a separator;
FIG. 18 is a schematic diagram of a cleaning assembly of the pressing apparatus shown in FIG. 5;
FIG. 19 is a schematic diagram of electrode plate processing equipment according to some embodiments of this application;
FIG. 20 is a schematic diagram of electrode plate processing equipment according to some other embodiments of this application; and
FIG. 21 is a schematic diagram of battery processing equipment according to some embodiments of this application.

### List of reference numerals:

1000-electrode plate processing equipment; 2000-shaping equipment; 100-pressing apparatus; 200-heating apparatus; 10-first pressing piece; 101-first surface; 11-base; 12-pressing portion; 20-second pressing piece; 201-second surface; 30-pressing clearance; 40-clearance groove; 401-first groove; 402-fillet; 403-second groove; 50-cleaning assembly; 51-sweeping piece; 511-rotation body; 512-elastic piece; 52-dust suction box; 521-receptacle; 522-dust suction bin; 523-dust suction port; 53-scraper; 60-dust sticking assembly; 61-first dust sticking roller; 62-second dust sticking roller; A-electrode plate; A1-first electrode plate; A2-second electrode plate; B-separator; C-target piece; D-grid structure; D1-grid cell; D2-line segment.

### DETAILED DESCRIPTION OF EMBODIMENTS

The following describes some embodiments of this application in detail. Examples of the embodiments are shown in the drawings, throughout which the same or similar reference numerals represent the same or similar components or the components of the same or similar functions. The embodiments described below with reference to the drawings are exemplary, and are intended to construe this application but not to limit this application.

Understandably, in the description of this application, a direction or positional relationship indicated by the terms such as "length", "width", "up", "down", "front", "back", "left", "right", "vertical", "horizontal", "top", "bottom", "in", and "out" is a direction or positional relationship based on the illustration in the drawings, and is merely intended for ease or brevity of description of this application, but does not necessarily mean or imply that the indicated device or component is located in the specified direction or constructed or operated in the specified direction. Therefore, such terms are not to be understood as a limitation on this application.

In addition, the technical terms such as "first" and "second" are used merely for ease of description, but not to indicate or imply relative importance or implicitly specify the number of technical features mentioned. Therefore, a feature defined with "first" or "second" may explicitly or implicitly include one or more of the features.

In the description of this application, unless otherwise expressly specified, "a plurality of" means at least two, and the term "at least two" includes two. Correspondingly, "a plurality of" means at least two, and includes two.

In the description of this application, unless otherwise expressly specified and defined, the terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art is able to understand the specific meanings of the terms in this application according to specific situations.

In the description of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

During processing of a battery, electrode plates and a separator of the battery typically need to be stacked first and then pressed to form a composite electrode plate. The composite electrode plate is shaped by winding or stacking to form an electrode assembly.

In a process of pressing a separator and an electrode plate to form a composite electrode plate, the separator is bonded and laminated to the electrode plate effectively by using the adhesion (laminating adhesion) of the separator. In a process of shaping the composite electrode plate into an electrode assembly, the separator also needs to achieve a bonding effect for the electrode assembly by using the adhesion (shaping adhesion) of the separator.

However, in some cases, the pressing operation on the electrode plate and the separator usually destroys the sticky coating on the surface of the separator, thereby resulting in a decrease in the adhesion of the separator. Consequently, during the shaping of the composite electrode plate, the separator can hardly exert a sticking effect, and is prone to cause inferior adhesion of the electrode assembly, thereby causing a decline in the quality of the electrode assembly.

In view of the above factors, after in-depth research, the inventor hereof has designed a pressing apparatus, that is, the pressing apparatus mentioned in the first aspect of this application. A clearance groove is created on a first surface of a first pressing piece and/or a second surface of a second pressing piece to provide a clearance for the separator, thereby alleviating the damage caused to the separator by the pressing apparatus. In this way, when the separator is subjected to a pressing action, the sheltered parts of the separator can retain adhesion and serve a sticking function in the subsequent shaping operation, thereby alleviating the problem of inferior adhesion of the electrode assembly, and improving the quality of the electrode assembly.

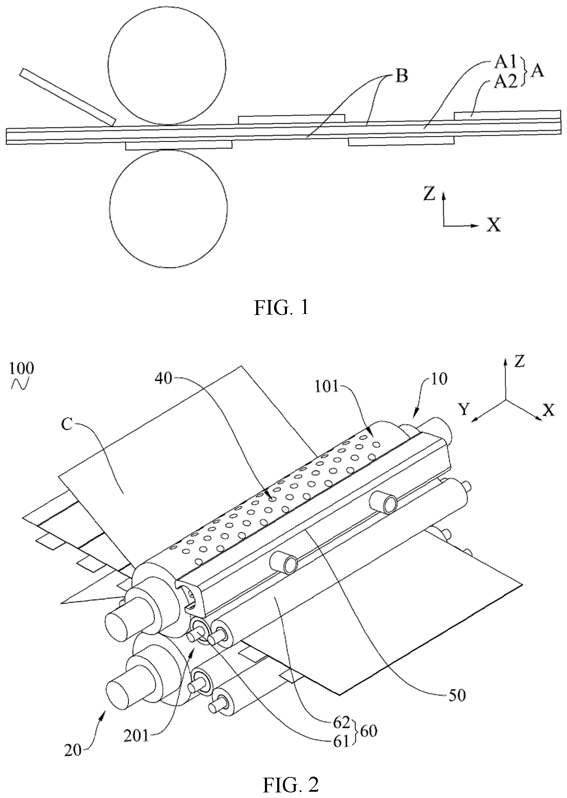

Please refer to FIG. 1, FIG. 1 is a schematic diagram of rolling an electrode plate A and a separator B in some scenarios. During the rolling, the separator B is stacked on both sides of a first electrode plate A1 first, and the first electrode plate A1 and the separator B are conveyed. The conveyance direction of the first electrode plate A1 and the separator B is the direction X shown in the drawing. Subsequently, a second electrode plate A2 is stacked on the separators B on both sides of the first electrode plate A1, and the second electrode plates A2 on the two sides of the first electrode plate A1 are staggered in sequence. Finally, the first electrode plate A1, the separators B, and the second electrode plate A2 are rolled so that the first electrode plate A1, the separators B, and the second electrode plate A2 form a composite electrode plate. In this process, because the second electrode plates A2 on the two sides of the first electrode plate A1 are staggered in sequence, among a plurality of second electrode plates A2 located on the same side of the first electrode plate A1, the separators B are partially exposed at a position between any two adjacent second electrode plates A2. During stacking to form the composite electrode plate, the exposed part of the separators B needs to be stacked and bonded to the adjacent second electrode plate A2.

However, during rolling of the first electrode plate A1, the second electrode plate A2, and the separators B, the sticky coating on the surface of the separators B is rolled and destroyed, thereby resulting in a decline in the adhesion of the separators B. Specifically, each separator B includes a substrate and a plurality of bonding points provided on the surface of the substrate. The bonding points are formed by the sticky coating, and endow the separator B with a bonding ability. As can be seen, when the separator B is rolled, the bonding points on the surface of the separator B are destroyed, thereby losing the bonding ability. Therefore, when the plates are stacked to form a composite electrode plate, the exposed part of the separator B is unable to be bonded to the adjacent second electrode plate A2 due to the decline in adhesion. That is, the shaping adhesion of the separator B decreases, thereby resulting in inferior adhesion in the resultant electrode assembly, and in turn, impairing the quality of the electrode assembly.

The first electrode plate A1 may be a positive electrode plate, and correspondingly, the second electrode plate A2 may be a negative electrode plate. Alternatively, the first electrode plate A1 is a negative electrode plate, and correspondingly, the second electrode plate A2 is a positive electrode plate.

The electrode plates A mentioned in the above and following embodiments may refer to the first electrode plate A1 or the second electrode plate A2, that is, may refer to a positive electrode plate or a negative electrode plate.

The laminating adhesion of the separator B mentioned above and below means an ability of the separator B to bond to the electrode plate A after a composite electrode plate is formed by pressing the separator B and the electrode plate A, that is, the state of firm bonding of the composite electrode plate formed by the separator B and the electrode plate A. The laminating adhesion may include the bonding ability of the separator B exerted before the separator B and the electrode plate A are pressed. The shaping adhesion of the separator B mentioned above and below means an ability of the separator B to bond to the electrode plate A in a process of shaping the stacked composite electrode plate to form an electrode assembly, that is, the state of firm bonding of the electrode assembly formed by the composite electrode plate. Understandably, the separator B first is bonded to the electrode plate A first by use of the laminating adhesion, so as to be laminated with the electrode plate A to form a composite electrode plate, and then is bonded to the electrode plate A by use of the shaping adhesion, so as to undergo shaping with the electrode plate A to form an electrode assembly.

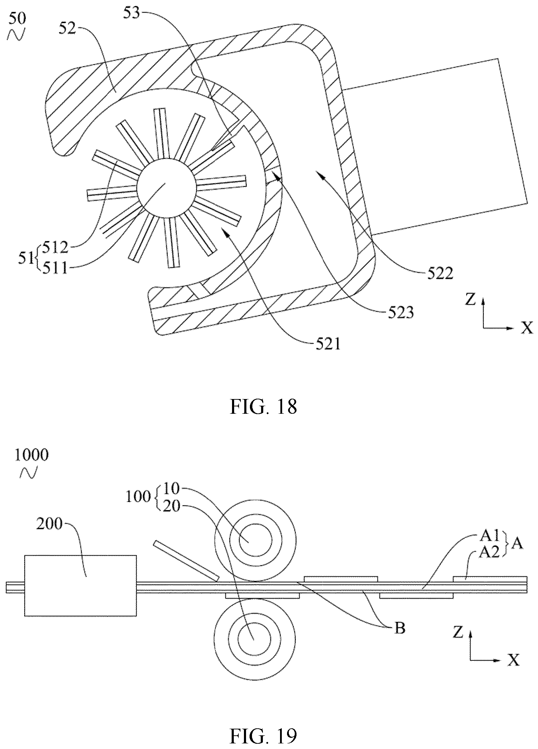

Referring to FIG. 2 and FIG. 19, the pressing apparatus 100 provided in the first aspect in an embodiment of this application is mainly configured to perform a pressing operation on the electrode plate A and the separator B, so as to press the electrode plate A and the separator B to form a composite electrode plate. In this way, the electrode plate A and the separator B can form an electrode assembly in the subsequent shaping process. Definitely, depending on actual application requirements, the pressing apparatus 100 may be further configured to press a target piece C other than the electrode plate A and the separator B, without being limited herein.

Understandably, the target piece C mentioned below may be the electrode plate A and the separator B, or the electrode plate A alone, or the separator B alone, or another target piece C different from the electrode plate A and the separator B. The target piece C may be a sheet material, a block structure, or another extruded profile.

Furthermore, the pressing apparatus 100 being configured to press a target piece C may be: pressing one target piece C, or pressing a plurality of target pieces C so that the plurality of target pieces C are pressed into a whole.

When the pressing apparatus 100 described below is configured to press the electrode plate A and the separator B, the quantity and distribution of the electrode plates A and the separators B may be the quantity and distribution shown in FIG. 1 and FIG. 19, or may be other quantities and distributions, without being limited herein.

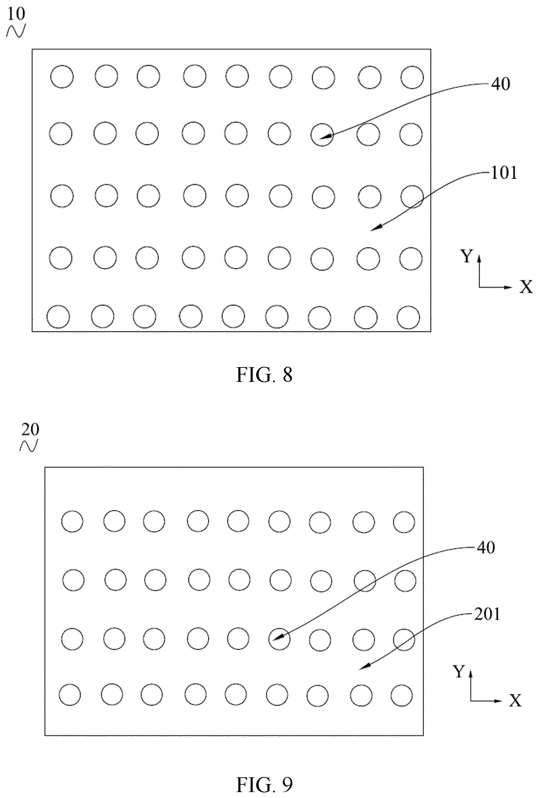

Referring to FIG. 2 to FIG. 5 and FIG. 19, the pressing apparatus 100 mainly includes a first pressing piece 10 and a second pressing piece 20. The first pressing piece10 includes a first surface 101, and the second pressing piece 20 includes a second surface 201. The first surface 101 and the second surface 201 are configured to coordinate to press a target piece C. In some embodiments, as shown in FIG. 2, FIG. 3, and FIG. 8, the first surface 101 is provided with a clearance groove 40; or, in some other embodiments, as shown in FIG. 9, the second surface 201 is provided with a clearance groove 40; or, in still some other embodiments, both the first surface 101 and the second surface 201 are provided with a clearance groove 40.

Both The first pressing piece 10 and the second pressing piece 20 are structures configured to press the target piece C. The first pressing piece 10 and the second pressing piece 20 may be, but are not limited to, block-shaped, plate-shaped, roller-shaped, and the like. The first surface 101 means a surface of the first pressing piece 10, the surface by which the target piece C is pressed. The second surface 201 means a surface of the second pressing piece 20, the surface by which the target piece C is pressed.

It is defined that the target piece C needs to be pressed along a preset direction. The first surface 101 and the second surface 201 coordinating to press the target piece C means that the first surface 101 and the second surface 201 press the two sides of the target piece C along the preset direction respectively. Specifically, the first surface 101 presses one of the two sides of the target piece C along the preset direction, and the second surface 201 presses the other side of the target piece C along the preset direction. In this way, the target piece C is subjected to opposing pressing forces to achieve the effect that the first pressing piece 10 and the second pressing piece 20 coordinate to press the target piece C. As an example, when the target piece C is a sheet, the first surface 101 and the second surface 201 may press the two sides of the target piece C along the thickness direction respectively.

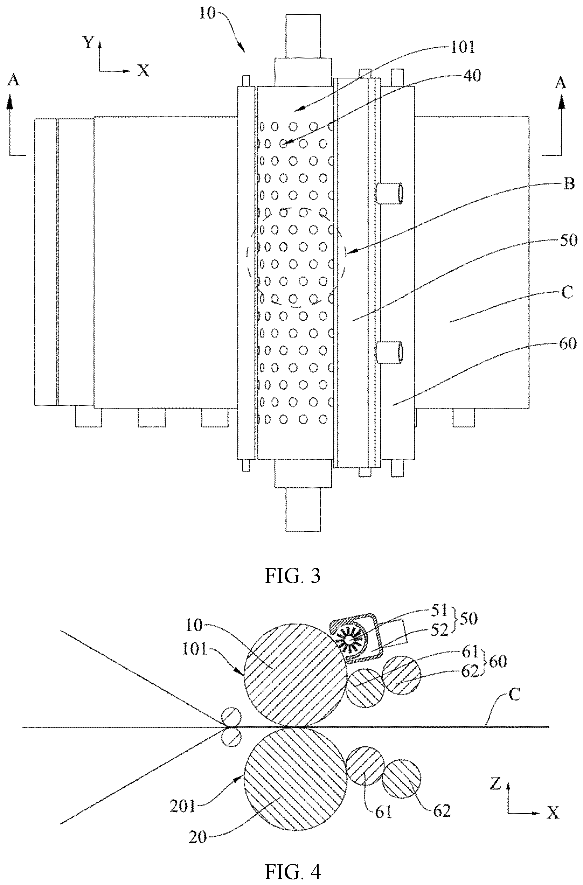

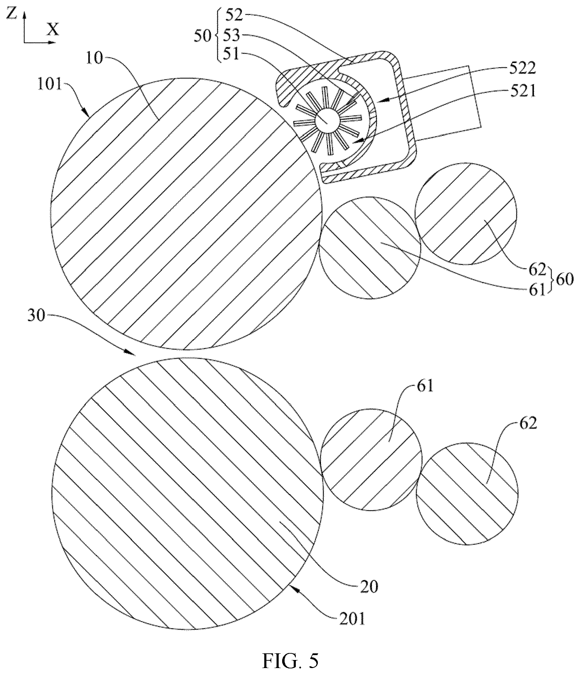

As shown in FIG. 4 and FIG. 5, the first pressing piece 10 and the second pressing piece 20 are spaced apart along the direction Z. The first surface 101 of the first pressing piece 10 and the second surface 201 of the second pressing piece 20 are spaced apart to form a pressing clearance 30. Moreover, the pressing clearance 30 runs through the integral structure formed by the first pressing piece 10 and the second pressing piece 20 along the direction X. In this way, the target piece C can pass from one side of the pressing clearance 30 to the other side of the pressing clearance 30 along the direction X, thereby passing through the pressing clearance 30. In this way, in a process of the target piece C passing through the pressing clearance 30 (that is, in a process of conveying the target piece C), the two sides of the target piece C along the direction Z closely fit the first surface 101 and the second surface 201 respectively, so that the first pressing piece 10 presses one side of the target piece C along the direction Z through the first surface 101, and the second pressing piece 20 presses the other side of the target piece C along the direction Z through the second surface 201. In this way, the first pressing piece 10 and the second pressing piece 20 can apply pressure to the two sides of the target piece C along the preset direction respectively, thereby achieving a pressing effect on the target piece C. The direction X is perpendicular to direction Z, and the direction Z is the preset direction.

The dimension of the pressing clearance 30 along the direction Z is smaller than the thickness of the target piece C along the preset direction. In this way, when the target piece C passes through the pressing clearance 30, the target piece C is subjected to a joint pressing action of the first pressing piece 10 and the second pressing piece 20, thereby reducing the thickness, along the preset direction, of the target piece C passing through the pressing clearance 30.

When the first surface 101 is provided with a clearance groove 40, the first pressing piece 10 is recessed from the first surface 101 to form the clearance groove 40, so that the opening of the clearance groove 40 is exposed on the first surface 101, that is, the first surface 101 can define the opening of the clearance groove 40. The groove wall of the clearance groove 40 is connected to the first surface 101.

When the second surface 201 is provided with a clearance groove 40, the second pressing piece 20 is recessed from the second surface 201 to form the clearance groove 40, so that the opening of the clearance groove 40 is exposed on the second surface 201, that is, the second surface 201 can define the opening of the clearance groove 40. The groove wall of the clearance groove 40 is connected to the second surface 201.

The clearance groove 40 serves to provide a clearance for the target piece C when the first surface 101 and the second surface 201 press the target piece C. Specifically, when the first surface 101 is provided with the clearance groove 40, the clearance groove 40 may be created at a position on the first pressing piece 10, the position being used to be spaced apart from the second pressing piece 20 to form a pressing clearance 30. The clearance groove 40 communicates with the pressing clearance 30. When the second surface 201 is provided with the clearance groove 40, the clearance groove 40 may be created at a position on the second pressing piece 20, the position being used to be spaced apart from the first pressing piece 10 to form a pressing clearance 30. The clearance groove 40 communicates with the pressing clearance 30. In this way, in a process of the target piece C passing through the pressing clearance 30, when the two sides of the target piece C along the preset direction closely fit the first surface 101 and the second surface 201 respectively, the target piece C also covers the opening of the clearance groove 40 to directly face the clearance groove 40, so as to provide a clearance through the clearance groove 40. In other words, a part of the target piece C passing through the pressing clearance 30 is pressed by the first surface 101 of the first pressing piece 10 and the second surface 201 of the second target piece 20, and another part of the target piece C is sheltered in the clearance groove 40 from being pressed by the first pressing piece 10 and the second target piece 20. In this way, the clearance groove 40 shelters a part of the target piece C, that is, shelters the target piece C partially, thereby leaving only a part of the target piece C to be pressed.

It is hereby noted that, when the target piece C passes through the pressing clearance 30, a part of the target piece C is pressed by the first pressing piece 10 and the second pressing piece 20 at the same time along the two sides along the preset direction. At this time, this part of the target piece C is subjected to the pressing action. Another part of the target piece C directly faces the clearance groove 40 on one side or both sides along the preset direction. At this time, this part of the target piece C is sheltered from being pressed. In this way, the target piece C is only partially pressed, and accordingly, the target piece C is partially sheltered from being pressed.

With the pressing apparatus 100 provided in this embodiment of this application, a clearance groove 40 is created on the first surface 101 of the first pressing piece 10 and/or the second surface 201 of the second pressing piece 20, the first surface and the second surface being configured to press the target piece C. In this way, when the first surface 101 and the second surface 201 coordinate to press the target piece C, the target piece C can directly face the clearance groove 40. Therefore, with the clearance groove 40 provided, the pressing apparatus 100 provides a clearance for a part of the target piece C, and accordingly, the pressing apparatus 100 can apply a pressing action to a part of the target piece. With this arrangement, when the pressing apparatus 100 is used to press a plurality of target pieces C into a whole, the pressing apparatus 100 partially presses and partially shelters the target pieces C during the pressing operation, thereby reducing the damage caused by the pressing apparatus 100 to the target pieces C, retaining the adhesion of the target pieces C to some extent, and in turn, alleviating the problem of inferior shaping adhesion caused by the impairment of the adhesion occurring during pressing of the target pieces C.

In this way, when the pressing apparatus 100 is used to press the electrode plate A and the separator B, the clearance groove 40 can provide a clearance for a part of the separator B that passes through the pressing clearance 30. In this way, the first pressing piece 10 and the second pressing piece 20 press only a part of the separator B, thereby alleviating the crushing of the separator B caused by the pressing apparatus 100. Therefore, when the separator B is subjected to a pressing action, the sheltered parts of the separator B can retain adhesion and serve a sticking function in the subsequent shaping operation, thereby alleviating the problem of inferior adhesion of the electrode assembly, and improving the quality of the electrode assembly.

In addition, the target piece C is partially sheltered in the clearance by the clearance groove 40 to alleviate the damage to the separator B caused by the pressing action of the first pressing piece 10 and the second pressing piece 20. In this way, the electrode assembly formed by the shaping can achieve a relatively high short-circuit test yield rate, and maximally avoid electron conduction between the electrode plates A on the two sides of the separator B (that is, a positive electrode plate and a negative electrode plate) caused by the damage to the separator B.

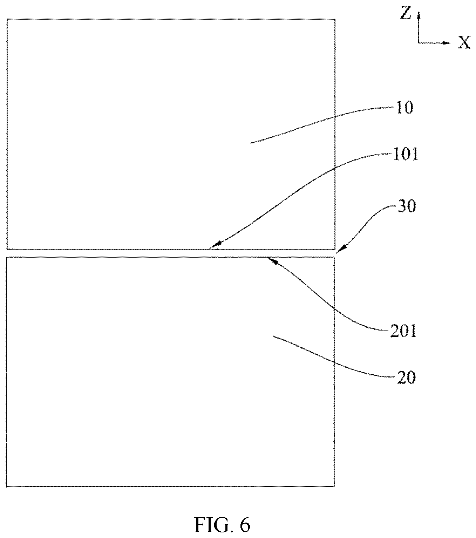

In some embodiments, as shown in FIG. 2, FIG. 5, and FIG. 7, the first surface 101 is a cylindrical surface. In some other embodiments, as shown in FIG. 6 and FIG. 8, the first surface 101 is a flat surface.

In some embodiments, as shown in FIG. 2 and FIG. 5, the second surface 201 is a cylindrical surface. In some other embodiments, as shown in FIG. 6, FIG. 7, and FIG. 9, the second surface 201 is a flat surface.

As shown in FIG. 2, FIG. 5, and FIG. 7, when the first surface 101 is a cylindrical surface, the first pressing piece 10 may assume a roller-shaped structure, and the first surface 101 is located on the outer peripheral surface of the first pressing piece 10. The first surface 101 is the outer peripheral surface of the first pressing piece 10 excluding the clearance groove 40, that is, the first surface 101 is a part of the outer peripheral surface of the first pressing piece 10. In this way, the first pressing piece 10 can rotate around a rotation axis thereof, so as to rotate when pressing the target piece C, and in turn, roll the target piece C. The rotation axis of the first pressing piece 10 is parallel to the direction Y shown in the drawing. Alternatively, the first pressing piece 10 does not rotate.

As shown in FIG. 6 and FIG. 8, when the first surface 101 is a flat surface, the first surface 101 means a part of the surface of the first pressing piece 10 on one side facing the second pressing piece 20, the part being other than the clearance groove 40. In other words, the first surface 101 is a part of one side of the first pressing piece 10, the side being configured to press the target piece C. Put differently, the first surface is a part other than the clearance groove 40 on one side of the first pressing piece 10, the side being configured to be spaced apart from the second pressing piece 20 to form a pressing clearance 30.

Accordingly, the second surface 201 means a surface of the second pressing piece 20, the surface being configured to press the target piece C. The specific definition of the second surface 201 may be explained in the same way as that of the first surface 101. Based on the arrangement of the second surface 201, the specific structure of the second pressing piece 20 may also be arranged in the same way as that of the first pressing piece 10, the details of which are omitted here.

As shown in FIG. 2 and FIG. 8, "the first surface 101 is provided with the clearance groove 40" specifically means that the opening of the clearance groove 40 extends to the first surface 101, so that the clearance groove 40 is exposed on the first surface 101. Understandably, the clearance groove 40 is disposed contiguous to the first surface 101 so that the first surface 101 defines the opening of the clearance groove 40. When the second surface 201 is provided with the clearance groove 40, the specific relationship between the clearance groove 40 of the second pressing piece 20 and the second surface 201 may also be explained in the same way as the specific relationship between the clearance groove 40 of the first pressing piece 10 and the first surface 101, the details of which are omitted here.

As shown in FIG. 4 to FIG. 7, when the target piece C passes through the pressing clearance 30 so that the first surface 101 and the second surface 201 coordinate to press the target piece C, the two sides of the target piece C along the preset direction closely fit the first surface 101 and the second surface 201 respectively. The first pressing piece 10 presses one side of the target piece C through the first surface 101, and the second pressing piece 20 presses the other side of the target piece C through the second surface 201. In addition, at least a part of the target piece C covers the opening of the clearance groove 40 so as to directly face the clearance groove 40 and be sheltered by the clearance groove 40.

In some embodiments, as shown in FIG. 2 to FIG. 5, the first pressing piece 10 and the second pressing piece 20 are both in the shape of rollers. The first pressing piece 10 and the second pressing piece 20 are both rotatable. The rotation axis of the first pressing piece 10 and the rotation axis of the second pressing piece 20 are parallel to each other, and are both parallel to the direction Y shown in the drawing. In this case, the first surface 101 is provided on the outer peripheral surface of the first pressing piece 10, and the second surface 201 is provided on the outer peripheral surface of the second pressing piece 20. In the process of the target piece C passing through the pressing clearance 30, the first surface 101 of the first pressing piece 10 and the second surface 201 of the second pressing piece 20 press the two sides of the target piece C respectively. At the same time, the first pressing piece 10 and the second pressing piece 20 can also adapt to the conveyance of the target piece C by rotating, so that the rotation direction of the first pressing piece 10 is opposite to the rotation direction of the second pressing piece 20 (for example, the first pressing piece 10 rotates clockwise, and the second pressing piece 20 rotates counterclockwise; or, the first pressing piece 10 rotates counterclockwise, and the second pressing piece 20 rotates clockwise). In this way, the first pressing piece 10 and the second pressing piece 20 can adapt to the conveyance of the target piece C (in the direction X shown in the drawing) when the first pressing piece and the second pressing piece press the target piece C toward each other, and can also jointly roll the target piece C. In this way, the target piece C can conveniently pass through the pressing clearance 30 directionally while being pressed, thereby rolling the target piece C effectively. In other words, the target piece C can be rolled by the first pressing piece 10 and the second pressing piece 20 while being conveyed, so that the efficiency of the pressing apparatus 100 in rolling the target piece C is relatively high.

In some other embodiments, as shown in FIG. 6, FIG. 8, and FIG. 9, both the first surface 101 of the first pressing piece 10 and the second surface 201 of the second pressing piece 20 may be a flat surface. In this way, the first surface 101 is provided on one side of the first pressing piece 10, the side facing the second pressing piece 20; and the second surface 201 is provided on one side of the second pressing piece 20, the side facing the first pressing piece 10. This arrangement makes the first pressing piece 10 and the second pressing piece 20 unable to roll the target piece C.

For this reason, in some implementations, when the target piece C passes through the pressing clearance 30, the first pressing piece 10 and the second pressing piece 20 can move toward each other to press the two sides of the target piece C respectively, thereby pressing the target piece C effectively. In this way, the target piece C needs to stop being conveyed so that the first surface 101 of the first pressing piece 10 and the second surface 201 of the second pressing piece 20 can press the target piece C. Subsequently, the first pressing piece 10 and the second pressing piece 20 move away from each other, so that the first surface 101 and the second surface 201 release the target piece C. At this time, the target piece C can continue being conveyed, so that the pressed part of the target piece C can leave the pressing apparatus 100, and a next part of the target piece C can pass through the pressing clearance 30 to get pressed.

In some other implementations, both the first surface 101 of the first pressing piece 10 and the second surface 201 of the second pressing piece 20 can be in sliding contact with the target piece C. When the target piece C passes through the pressing clearance 30, the target piece C slides relative to the first surface 101 and the second surface 201, so that the target piece C can smoothly pass through the pressing clearance 30, thereby achieving the effect that the target piece C is pressed while being conveyed. It is hereby noted that, in this implementation, relatively high requirements are imposed on the conveyance force for the target piece C and on the relative sliding of the target piece C against the first surface 101 and the second surface 201. Specifically, the target piece C needs to be pressed by the first surface 101 and the second surface 201 while being conveyed, and also needs to slide relative to the first surface 101 and the second surface 201 at the same time. This arrangement inevitably poses risks of breakage of the target piece C under the pressing action of the first surface 101 and the second surface 201. For this reason, the above mechanism in which the first pressing piece 10 and the second pressing piece 20 can move toward and away from each other is more conducive to the protection of the target piece C. However, since the target piece C needs to start and stop being conveyed frequently, the pressing efficiency is low.

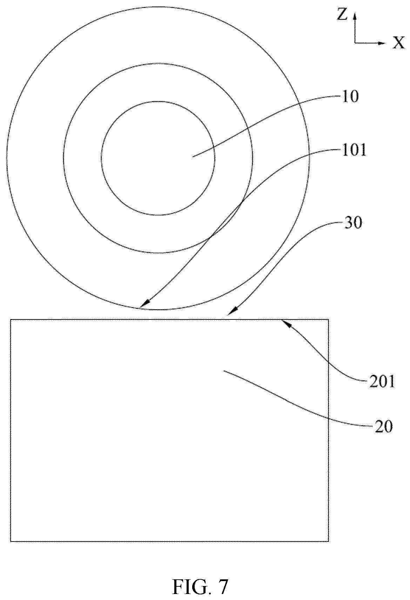

In some other embodiments, as shown in FIG. 7 and FIG. 9, the first pressing piece 10 is in the shape of a roller and is rotatable. The first surface 101 is provided on the outer peripheral surface of the first pressing piece 10. In addition, the second surface 201 of the second pressing piece 20 is a flat surface. The second surface 201 is provided on one side of the second pressing piece 20, the side facing the first pressing piece 10. The second surface is in sliding contact with the target piece C. In this way, when the target piece C passes through the pressing clearance 30, the first pressing piece 10 and the second pressing piece 20 presses the target piece C through the first surface 101 and the second surface 201 respectively. In this process, the first pressing piece 10 can rotate to adapt to the conveyance of the target piece C, so as to press the target piece C while rolling and conveying the target piece C, that is, apply a rolling action on the target piece C. In addition, the target piece C at this time also slides relative to the second pressing piece 20. This arrangement can also achieve the effect that the target piece C is pressed while being conveyed.

With the above technical solution, the surface, configured to press the target piece C, of the first pressing piece 10, may be a flat surface or a cylindrical surface; and the surface, configured to press the target piece C, of the second pressing piece 20 may be a flat surface or a cylindrical surface. In this way, the first pressing piece 10 and the second pressing piece 20 can press the target piece C in diverse manners, so that the first pressing piece 10 and the second pressing piece 20 can be designed flexibly.

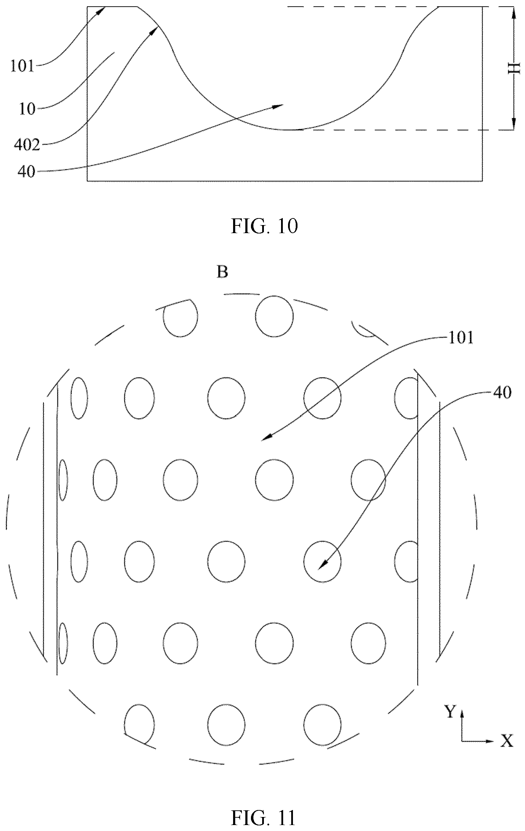

In some embodiments, referring to FIG. 2 and FIG. 10, when the first surface 101 is provided with a clearance groove 40, the groove wall of the clearance groove 40 transitions to the first surface 101 by way of a circular arc. When the second surface 201 is provided with a clearance groove 40, the groove wall of the clearance groove 40 transitions to the second surface 201 by way of a circular arc.

As shown in FIG. 10, FIG. 10 is schematic partial view of the first pressing piece 10. When the clearance groove 40 is provided on the first surface 101, configured to press the target piece C, of the first pressing piece 10, a fillet 402 is provided at a junction between the groove wall of the clearance groove 40 and the first surface 101 to implement an arc transition between the groove wall of the clearance groove 40 and the first surface 101. The arc transition can alleviate the problem of a sharp junction between the first surface 101 and an inner sidewall of the clearance groove 40. Accordingly, when the clearance groove 40 is provided on the second surface 201, configured to press the target piece C, of the second pressing piece 20, a fillet 402 may also be provided at a junction between the groove wall of the clearance groove 40 and the second surface 201 to implement an arc transition between the groove wall of the clearance groove 40 and the second surface 201.

The above technical solution can alleviate the problem of sharp edges at the opening of the clearance groove 40, and the problem that the target piece C is damaged by puncturing, so that the target piece C can be conveyed and pressed smoothly.

In some embodiments, referring to FIG. 2, FIG. 3, FIG. 8, and FIG. 19, the first surface 101 is provided with a plurality of the clearance grooves 40. The plurality of clearance grooves 40 on the first surface 101 are spaced apart.

In some other embodiments, referring to FIG. 9 and FIG. 19, the second surface 201 is provided with a plurality of the clearance grooves 40. The plurality of clearance grooves 40 on the second surface 201 are spaced apart.

In some other embodiments, the first surface 101 and the second surface 201 each are provided with a plurality of the clearance grooves 40. The plurality of clearance grooves 40 on the first surface 101 are spaced part, and the plurality of clearance grooves 40 on the second surface 201 are spaced apart.

With the above technical solution, the plurality of clearance grooves 40 on the first surface 101 are spaced apart, and/or, the plurality of clearance grooves 40 on the second surface 201 are spaced apart. In this way, a recess may be created on the first surface 101 or the second surface 201 to form the clearance groove 40. In other words, by performing just simple operations on the first pressing piece 10 and/or the second pressing piece 20, the pressing apparatus 100 can provide a clearance for a part of the separator B effectively and press a part of the separator B, thereby alleviating the problem of decreased shaping adhesion of the separator B and the problem of crushing of the separator B.

In some embodiments, referring to FIG. 2, FIG. 3, FIG. 8, and FIG. 19, the first surface 101 is provided with a plurality of the clearance grooves 40. The plurality of clearance grooves 40 are distributed evenly on the first surface 101.

With the above technical solution, the plurality of clearance grooves 40 on the first surface 101 are distributed evenly on the first surface 101. When the target piece C passes through the pressing clearance 30, the plurality of clearance grooves 40 can provide clearances for sheltering a plurality of evenly distributed parts of the target piece C. In other words, the sheltered parts of the target piece C are evenly distributed. Correspondingly, the pressing apparatus 100 can press the plurality of evenly distributed parts of the target piece C. In other words, the pressed parts of the target piece C are evenly distributed. In this way, when the pressing apparatus 100 is used to press the separator B and the electrode plate A, the pressing apparatus 100 can press a plurality of evenly distributed parts of the separator B so that the separator B can be bonded to the electrode plate A effectively, that is, the separator B can possess relatively strong laminating adhesion. In addition, the pressing apparatus 100 can also provide clearances for the plurality of evenly distributed parts of the separator B, so that the plurality of evenly distributed parts of the separator B retains adhesion, and the separator B possesses relatively strong shaping adhesion. During shaping of the composite electrode plate formed by pressing the electrode plate A and the separator B, the sheltered parts of the separator B can implement bonding of the electrode assembly effectively, and achieve relatively high quality of the electrode assembly.

In some embodiments, as shown in FIG. 9 and FIG. 19, when the second surface 201 of the second pressing piece 20 is provided with a plurality of the clearance grooves 40, the plurality of clearance grooves 40 are distributed evenly on the second surface 201.

With the above technical solution, the target piece C can also be evenly pressed effectively, so that the separator B can possess relatively strong laminating adhesion and shaping adhesion, and the electrode assembly can be of relatively high quality.

In some embodiments, referring to FIG. 2, FIG. 3, FIG. 11, FIG. 12, and FIG. 19, when the first surface 101 is provided with a plurality of clearance grooves 40, the center points of the plurality of clearance grooves 40 are connectible to form a grid structure D, and a minimum grid cell D1 of the grid structure D is an equilateral triangle, thereby implementing uniform distribution of the plurality of clearance grooves 40 on the first surface 101. Correspondingly, when the second surface 201 is provided with a plurality of clearance grooves 40, the center points of the plurality of clearance grooves 40 are also connectible to form a grid structure D, and a minimum grid cell D1 of the grid structure D is an equilateral triangle, thereby implementing uniform distribution of the plurality of clearance grooves 40 on the second surface 201.

The center point of a clearance groove 40 means an approximate center position of the opening of the clearance groove 40.

As shown in FIG. 3, FIG. 11, and FIG. 12, in an example in which the first surface 101 is provided with a plurality of clearance grooves 40, the plurality of clearance grooves 40 form a plurality of rows of clearance grooves 40. When the first pressing piece 10 is in the shape of a roller, as shown in FIG. 2, FIG. 3, FIG. 11, and FIG. 12, the plurality of rows of clearance grooves 40 are evenly distributed on the outer peripheral surface of the first pressing piece 10 along a circumferential direction. When the first surface 101 is a flat surface, the plurality of rows of clearance grooves 40 are evenly distributed on one side of the first pressing piece 10 along the direction X, the side being configured to press the target piece C. Each row of clearance grooves 40 includes a plurality of clearance grooves 40 spaced apart along the direction Y. In the distribution direction (direction Y) of each row of clearance grooves 40, the clearance grooves 40 in two adjacent rows of clearance grooves 40 are alternately distributed. Specifically, the distribution of the two rows of clearance grooves 40 (a first row of clearance grooves 40 and a second row of clearance grooves 40) is as follows: in the direction Y, the clearance grooves 40 are distributed in the following order: the first clearance groove 40 of the first row of clearance grooves 40, the first clearance groove 40 of the second row of clearance grooves 40, the second clearance groove 40 of the first row of clearance grooves 40, the second clearance groove 40 of the second row of clearance grooves 40, and so on, sequentially.

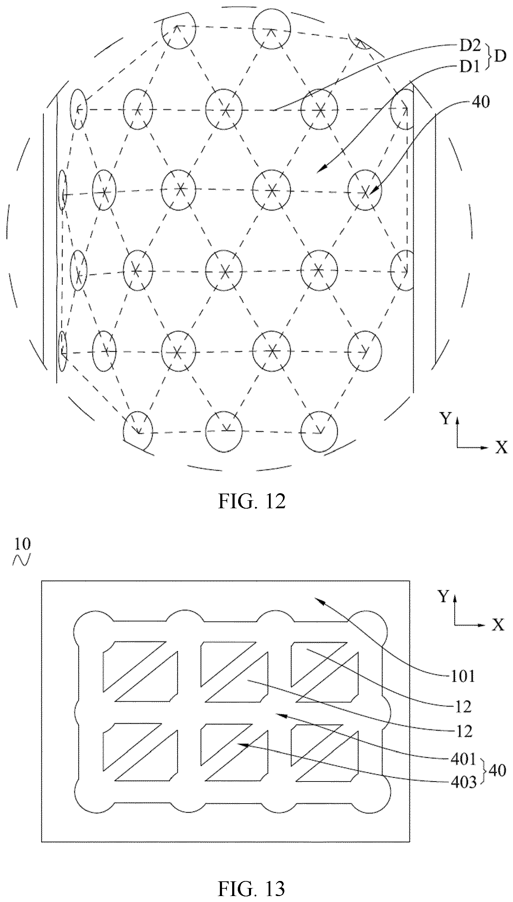

In this way, when the center points of two adjacent clearance grooves 40 are connected to form line segments D2, and the line segments formed by the plurality of clearance grooves 40 can form a grid structure D, as shown in FIG. 12. FIG. 12 is a schematic diagram of a grid structure D formed by the line segments D2 that are formed by connecting a plurality of clearance grooves 40 on the first pressing piece 10. In the grid structure, among two adjacent clearance grooves 40, one end of the line segment D2 is connected to the center point of one of the clearance grooves 40, and the other end of the line segment D2 is connected to the center point of the other clearance groove 40. As can be seen from FIG. 12, the grid cell D includes a plurality of grid cells D1. The minimum grid cell D1 is an equilateral triangle. In this way, the plurality of clearance grooves 40 are distributed evenly.

Correspondingly, when the second surface 201 is provided with a plurality of clearance grooves 40, the distribution of the plurality of clearance grooves 40 may be learned with reference to the distribution of the plurality of clearance grooves 40 on the first surface 101, the details of which are omitted here.

With the above technical solution, the clearance grooves 40 in any two adjacent rows of clearance grooves 40 are alternately distributed along the direction Y. In this way, a relatively large number of parts of the target piece C are sheltered along the direction Y and the conveyance direction of the target piece C. In other words, the sheltered parts of the target piece C are distributed densely along both the direction Y and the conveyance direction of the target piece C. In this way, the separator B possesses relatively strong laminating adhesion that enables lamination of the electrode plate A and the separator B to form a composite electrode plate; and the separator B also possesses relatively strong shaping adhesion that enables the composite electrode plate to be shaped into an electrode assembly.

In some other embodiments, referring to FIG. 8, when the first surface 101 is provided with a plurality of clearance grooves 40, the plurality of clearance grooves 40 may be distributed in arrays along two different directions, thereby implementing uniform distribution of the plurality of clearance grooves 40. When the first pressing piece 10 is in the shape of a roller, the plurality of clearance grooves 40 are distributed in arrays along the circumferential direction and the direction Y of the first pressing piece 10 separately. When the first surface 101 is a flat surface, as shown in FIG. 8, the plurality of clearance grooves 40 are distributed in arrays along the direction Y and the direction X.

Correspondingly, when the second pressing piece 20 is provided with a plurality of clearance grooves 40, as shown in FIG. 9, the plurality of clearance grooves 40 may be distributed in arrays along two different directions, thereby implementing uniform distribution of the plurality of clearance grooves 40, the details of which are omitted here and may be learned with reference to the description about the distribution of the plurality of clearance grooves 40 on the first pressing piece 10.

Based on the above structure, understandably, when a plurality of clearance grooves 40 are provided on the first pressing piece 101 alone, as shown in FIG. 2, FIG. 3, and FIG. 12, the center points of the plurality of clearance grooves 40 are connected to form a grid structure D. A minimum grid cell D1 of the grid structure D is an equilateral triangle.

When a plurality of clearance grooves 40 are provided on both the first pressing piece 101 and the second pressing piece 201, in some embodiments, among the plurality of clearance grooves 40 created on the first surface 101, the center points of the plurality of clearance grooves 40 are connectible to form a grid structure D, and a minimum grid cell D1 of the grid structure D is an equilateral triangle. In addition, the plurality of clearance grooves 40 created on the second surface 201 may be distributed in arrays along two different directions. Alternatively, in some other embodiments, among the plurality of clearance grooves 40 created on the first surface 101, the center points of the plurality of clearance grooves 40 are connectible to form a grid structure D, and a minimum grid cell D1 of the grid structure D is an equilateral triangle. In addition, among the plurality of clearance grooves 40 created on the second surface 201, the center points of the plurality of clearance grooves 40 are connectible to form a grid structure D, and a minimum grid cell D1 of the grid structure D is an equilateral triangle. Alternatively, in still some other embodiments, the plurality of clearance grooves 40 created on the first surface 101 are distributed in arrays along two different directions, and the plurality of clearance grooves 40 created on the second surface 201 are distributed in arrays along two different directions.

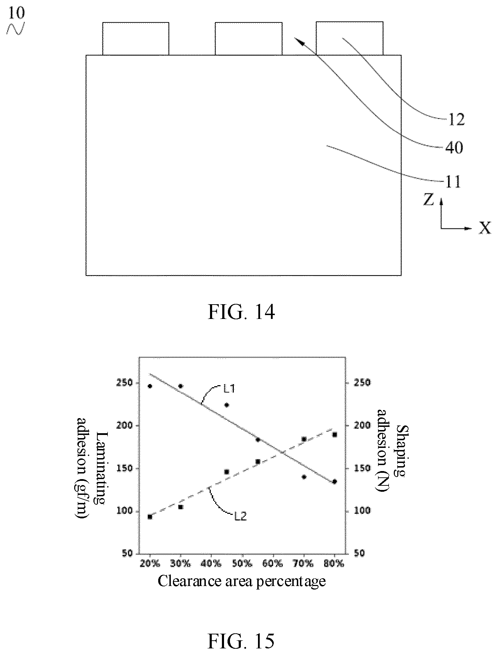

In some embodiments, referring to FIG. 13 and FIG. 14, each clearance groove 40 includes a plurality of first grooves 401 and a plurality of second grooves 403. A second groove 403 may be disposed between two adjacent first grooves 401, and the two adjacent first grooves 401 communicate with each other through the second groove 403.

In this embodiment, the number of clearance grooves 40 may be one or more.

As shown in FIG. 13 and FIG. 14, FIG. 13 and FIG. 14 are schematic diagrams of the first pressing piece 10. In an example in which the first pressing piece 10 is provided with a plurality of first grooves 401 and second grooves 403, a second groove 403 is created between two adjacent first grooves 401, so that the plurality of first grooves 401 and the plurality of second grooves 403 communicate with each in sequence. In this way, the first grooves 401 and the second grooves 403 divide the first surface 101 into a plurality of discontinuous parts. That is, the first surface 101 is a discontinuous surface. Alternatively, in some other embodiments, the second grooves 403 may be arranged in such a way that only some of the first grooves 401 communicate with each other. In addition, some of the first grooves 401 are spaced apart. In this case, the first surface 101 may still be a continuous surface.

With the above technical solution, in disposing the first pressing piece 10, a plurality of first grooves 401 and a plurality of second grooves 403 can be directly created on the first surface 101 of the first pressing piece 10.

In addition, the base 11 of the first pressing piece 10 may be prepared first, and then a plurality of pressing portions 12 spaced apart are disposed on the base 11, so that the plurality of pressing portions 12 are spaced out to form the plurality of first grooves 401 and the plurality of second grooves 403. In this case, all the first grooves 401 and all the second grooves 403 communicate with each other. In this case, the first pressing piece 10 presses the target piece C through the pressing portion 12. The surfaces, facing away from the base 11, of the plurality of pressing portions 12 form the first surface 101. The above arrangement makes the molding process of the first pressing piece 10 very flexible and easy to implement.

Correspondingly, when the second surface 201 of the second pressing piece 20 is provided with a plurality of first grooves 401, the second surface 201 may also be provided with a plurality of second grooves 403. In the second pressing piece 20, the relationship between the second groove 403 and the first groove 401 may be learned with reference to the relationship between the second groove 403 and the first groove 401 in FIG. 13 and FIG. 14, the details of which are omitted here. In this way, the molding process of the second pressing piece 20 is also very flexible and easy to implement.

In some embodiments, referring to FIG. 2, FIG.3, and FIG. 8, when the first surface 101 is provided with a clearance groove 40, the contour of the clearance groove 40 on the first surface 101 is circular. Definitely, the contour of the clearance groove may be elliptical, square, or another shape instead. As shown in FIG. 9, when the second surface 201 is provided with a clearance groove 40, the contour of the clearance groove 40 on the second surface 201 is circular. Definitely, the contour of the clearance groove may be elliptical, square, or another shape instead.

Using the clearance groove 40 on the first surface 101 as an example, as shown in FIG. 8 and FIG. 9, the contour of the clearance groove 40 on the first surface 101 is circular, indicating that the contour of the opening of the clearance groove 40 is circular, that is, the contour of the opening of the clearance groove 40 defined by the first surface 101 is circular.

Correspondingly, the contour of the clearance groove 40 on the first surface 101 is elliptical, square, or another shape, which may be explained in the same way. The contour of the clearance groove 40 on the second surface 201 is circular, elliptical, square, or another shape, which may be explained in the same way.

With the above technical solution, the contour of the clearance groove 40 on the first surface 101 and/or the second surface 201 can be circular, elliptical, square, or other shapes, so that the design of the clearance groove 40 can be very flexible and easy to implement.

In addition, when the first pressing piece 10 is in the shape of a roller and is provided with the clearance groove 40, the clearance groove 40 may be in a spiral shape. Specifically, the clearance groove 40 is spirally wound on the outer periphery of the first pressing piece 10 around an axis that is the rotation axis of the first pressing piece 10.

In some embodiments, referring to FIG. 2 and FIG. 15, the clearance groove 40 satisfies: a ratio of an area of a part, directly facing the clearance groove 40, of the target piece C to an area of the target piece C falls within a range of 30% to 40%.

The area of the part, directly facing the clearance groove 40, of the target piece C means the area of a part of the target piece C on one side along the preset direction, the part directly facing the clearance groove 40. The area of the target piece C means the area of the target piece C on one side along the preset direction. Correspondingly, the area of a part, directly facing the clearance groove 40, of the separator B to be mentioned below also means the area of a part of the separator B on one side along the preset direction, the part directly facing the clearance groove 40; and the area of the separator B means the area of the separator B on one side along the preset direction. When the target piece C is a sheet, the preset direction is a thickness direction. For ease of description, the following description uses an example in which the preset direction is the thickness direction, but the thickness direction means a direction in which the target piece C is pressed.

When the target piece C passes through the pressing clearance 30, one side or both sides of a part of the target piece C directly face the clearance groove 40 so as to be sheltered by the clearance groove 40. The area of this part of the target piece C on one side along the thickness direction is 30% to 40% of the area of the target piece C on this side along the thickness direction. All the remaining part, not directly facing the clearance groove 40, of the target piece C is pressed by the first pressing piece 10 and the second pressing piece 20. The area of this part of the target piece C on one side is 60% to 70% of the area of the target piece C on this side.

When the pressing apparatus 100 is used to press the electrode plate A and the separator B, in a process of the electrode plate A and the separator B passing through the pressing clearance 30, a part of the separator B is sheltered by the clearance groove 40. The area of the sheltered part of the separator B on one side is 30% to 40% of the area of the separator B on this side. Another part of the separator B is pressed by the first pressing piece 10 and the second pressing piece 20. The area of the pressed part of the separator B on one side is 60% to 70% of the area of the separator B on this side. In this way, understandably, when the electrode plate A and the separator B are laminated to form a composite electrode plate, the separator B is bonded to the electrode plate A through 60% to 70% of the bonding points on the separator B, thereby implementing lamination bonding between the separator B and the electrode plate A. When the composite electrode plate formed by the electrode plate A and the separator B is shaped to form an electrode assembly, the remaining 30% to 40% of the bonding points on the separator B are bonded to the electrode plate A, thereby implementing shaping bonding of the electrode assembly.

It is hereby noted that, when the separator B and the electrode plate A are stacked up, before the separator B and the electrode plate A are pressed, the separator B is not bonded to the electrode plate A, that is, the bonding points of the separator B do not fail. Alternatively, the separator B is bonded to the electrode plate A, but the degree of bonding exerts little effect on the bonding between the separator B and the electrode plate A in the subsequent shaping operation. In other words, at this time, the number of bonding points of the separator B available for bonding to the electrode plate A is relatively small. After the pressing apparatus 100 presses the separator B, 30% to 40% of the bonding points of the separator B still remain, so that the separator B still possesses relatively strong shaping adhesion.

As shown in FIG. 15, FIG. 15 is a graph of a relationship of a clearance area percentage of a separator B to laminating adhesion of the separator B and shaping adhesion of the separator B separately.

The clearance area percentage of the separator B is a ratio of the area of a part, directly facing the clearance groove 40, of the separator B to the area of the separator B, that is, a ratio of the area of the sheltered part of the separator B on one side to the area of the separator B on this side. The clearance area percentage of the separator B may also be defined as a clearance area percentage of the target piece C below.

The relationship curve L1 shown in FIG. 15 is a relationship curve between the clearance area percentage of the separator B and the laminating adhesion of the separator B. When the clearance area percentage of the separator B increases, the laminating adhesion of the separator B decreases. The relationship curve L2 shown in FIG. 15 is a relationship curve between the clearance area percentage of the separator B and the shaping adhesion of the separator B. When the clearance area percentage of the separator B increases, the shaping adhesion of the separator B increases. As can be seen from the drawing, when the clearance area percentage of the separator B is 30% to 40%, the corresponding laminating adhesion range can meet the requirement of pressing the separator B and the electrode plate A to form a composite electrode plate. That is, the composite electrode plate is made to be in a good state of firm bonding, and can meet the quality requirement of the composite electrode plate. In addition, the corresponding shaping adhesion can also meet the requirement of shaping the composite electrode plate to form an electrode assembly, that is, make the electrode assembly be in a good state of firm bonding, so as to meet the quality requirement of the electrode assembly. Therefore, in this embodiment, the clearance area percentage of the target piece C may be set to 30% to 40%.

With the above technical solution, the clearance area percentage of the target piece C is 30% to 40%, so that the laminating adhesion of the separator B can meet the requirement of firm bonding of the composite electrode plate, and the shaping adhesion of the separator B can meet the requirement of firm bonding of the electrode assembly, thereby improving the quality of the electrode assembly.

In some embodiments, referring to FIG. 2, FIG. 3, FIG. 8, FIG. 15, and FIG. 19, the clearance groove 40 is created on the first surface 101. A ratio of a first area of the clearance groove 40 on the first surface 101 to a second area falls within a range of 30% to 40%, where, the second area is a sum of the first area and an area of the first surface 101.

As shown in FIG. 8, when the first surface 101 is a flat surface, the first surface 101 means a surface of the first pressing piece 10 excluding the clearance groove 40 on a side facing the second pressing piece 20 after the first pressing piece 10 is provided with the clearance groove 40. In this case, the second area means the area of the first pressing piece 10 on one side facing the second pressing piece 20 before being provided with the clearance groove 40. As shown in FIG. 2 and FIG. 3, when the first surface 101 is a cylindrical surface, the first surface 101 means the outer peripheral surface of the first pressing piece 10 excluding the clearance groove 40 after the first pressing piece 10 is provided with the clearance groove 40. In this case, the second area means the area of the outer peripheral surface of the first pressing piece 10 before being provided with the clearance groove 40.

The first area of the clearance groove 40 on the first surface 101 means the area of a pattern defined by an opening contour of the clearance groove 40. The first area is a difference between the second area and the area of the first surface 101.

The ratio of the first area to the second area may be considered as the clearance area percentage of the first pressing piece 10, or the clearance area percentage of the clearance groove 40, or the clearance area percentage of the pressing apparatus 100.

With the above technical solution, when the clearance groove 40 is created on the first pressing piece 10 alone, the clearance area percentage of the first pressing piece 10 is 30% to 40%. In this way, when the target piece C passes through the pressing clearance 30, the target piece C is sheltered by the clearance groove 40, so that the clearance area percentage of the target piece C reaches 30% to 40%. In other words, the setting of the clearance area percentage of the first pressing piece 10 endows the target piece C with the equivalent clearance area percentage. In this way, when the pressing apparatus 100 is used to press the separator B and the electrode plate A, the separator B possesses relatively strong laminating adhesion and shaping adhesion, thereby alleviating the problem of inferior shaping adhesion and improving the quality of the electrode assembly.

In some other embodiments, the clearance groove 40 is created on both the first pressing piece 10 and the second pressing piece 20. Here, it is predefined that, before the first pressing piece 10 is provided with the clearance groove 40, the area of the surface, configured to press the target piece C, of the first pressing piece 10 is S1. The area S1 here is the second area mentioned in the above embodiment. In addition, it is predefined that, before the second pressing piece 20 is provided with the clearance groove 40, the area of the surface, configured to press the target piece C, of the second pressing piece 20 is S2. The area S2 here is also similar to the definition of the second area. Moreover, it is also predefined that the area of the clearance groove 40 of the first pressing piece 10 on the first surface 101 is S3, and the area of the clearance groove 40 of the second pressing piece 20 on the second surface 201 is S4.

In this way, the area S1 may be identical to the area S2. When the pressing position located on the target piece C and corresponding to the clearance groove 40 of the first pressing piece 10 is staggered from the pressing position located on the target piece C and corresponding to the clearance groove 40 of the second pressing piece 20, the clearance area percentage of the target piece C may be a ratio of a sum of the area S3 and the area S4 to the area S1. This ratio falls within the range of 30% to 40%. When the pressing position located on the target piece C and corresponding to the clearance groove 40 of the first pressing piece 10 overlaps the pressing position located on the target piece C and corresponding to the clearance groove 40 of the second pressing piece 20, it is predefined that the area of an overlap part on the first surface 101 is S5, where the overlap part is an overlap between the pressing position located on the target piece C and corresponding to the clearance groove 40 of the first pressing piece 10 and the pressing position located on the target piece C and corresponding to the clearance groove 40 of the second pressing piece 20. The clearance area percentage of the target piece C may be a ratio of a difference to the area S1, where the difference is a value obtained by subtracting the area S5 from a sum of the area S3 and the area S4. This ratio falls within the range is 30% to 40%.

"The pressing position located on the target piece C and corresponding to the clearance groove 40 of the first pressing piece 10 is staggered from the pressing position located on the target piece C and corresponding to the clearance groove 40 of the second pressing piece 20" means that, when the target piece C passes through the pressing clearance 30 to let the first pressing piece 10 and the second pressing piece 20 coordinate to press the target piece C, the part, sheltered by the clearance groove 40 of the first pressing piece 10, of the target piece C does not overlap the part sheltered by the clearance groove 40 of the second pressing piece 20. Accordingly, when the pressing position located on the target piece C and corresponding to the clearance groove 40 of the first pressing piece 10 overlaps the pressing position located on the target piece C and corresponding to the clearance groove 40 of the second pressing piece 20, the part, sheltered by the clearance groove 40 of the first pressing piece 10, of the target piece C overlaps the part sheltered by the clearance groove 40 of the second pressing piece 20. In other words, at least a part of the target piece C is sheltered by both the clearance groove 40 of the first pressing piece 10 and the clearance groove 40 of the second pressing piece 20 concurrently.

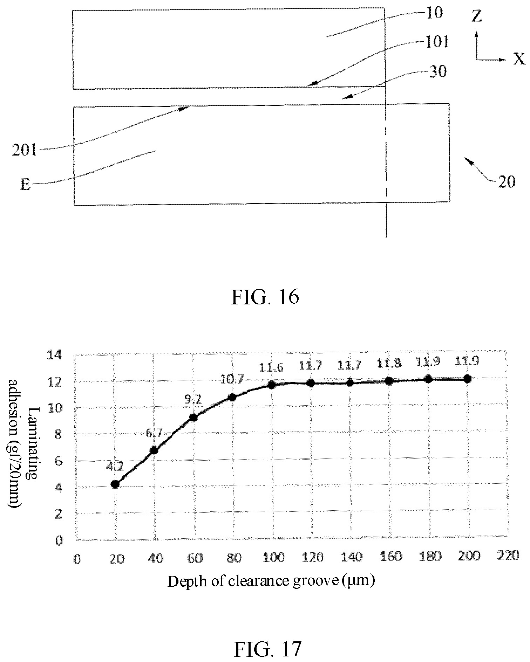

The area S1 may be less than the area S2. In this case, a continuous part E may be divided from the rest of the second pressing piece 20. In the continuous part, the area of the clearance groove 40 on the second surface 201 is S6. As shown in FIG. 16, FIG. 16 is a front view of the first pressing piece 10 and the second pressing piece 20 in some embodiments. The part E is a part, directly facing the first pressing piece 10, of the second pressing piece 20, that is, a part of the second pressing piece 20, where the part can coordinate with the first pressing piece 10 to press the target piece C. In this way, when the pressing position located on the target piece C and corresponding to the clearance groove 40 of the first pressing piece 10 is staggered from the pressing position located on the target piece C and corresponding to the clearance groove 40 of the part E, the clearance area percentage of the target piece C may be a ratio of a sum of the area S3 and the area S6 to the area S1. This ratio falls within the range of 30% to 40%. When the pressing position located on the target piece C and corresponding to the clearance groove 40 of the first pressing piece 10 overlaps the pressing position located on the target piece C and corresponding to the clearance groove 40 of the part E, it is defined that the area of an overlap part on the first surface 101 is S7, where the overlap part is an overlap between the pressing position located on the target piece C and corresponding to the clearance groove 40 of the first pressing piece 10 and the pressing position located on the target piece C and corresponding to the clearance groove 40 of the part E. The clearance area percentage of the target piece C may be a ratio of a difference to the area S1, where the difference is a value obtained by subtracting the area S7 from a sum of the area S3 and the area S6. This ratio falls within the range is 30% to 40%.

In some embodiments, referring to FIG. 2, FIG. 3, FIG. 10, FIG. 17, and FIG. 19, the depth of the clearance groove 40 is greater than 40 µm.

As shown in FIG. 10, in an example in which the clearance groove 40 is created on the first pressing piece 10, the depth of the clearance groove 40 means a distance between the bottom of the clearance groove 40 and the first surface 101, and is indicated by the dimension H shown in the drawing. The dimension H may be 50 µm, 60 µm, 70 µm, 80 µm, 90 µm, 100 µm, or the like. Correspondingly, when the second pressing piece 20 is also provided with the clearance groove 40, the depth of the clearance groove 40 may also be greater than 40 µm.

As shown in FIG. 17, FIG. 17 is a graph of a relationship between a depth of a clearance groove 40 and laminating adhesion of a separator B. As can be seen from the relationship curve between the depth of the clearance groove 40 and the laminating adhesion of the separator B shown in the drawing, when the depth of the clearance groove 40 is greater than 40 µm, the separator B possesses relatively strong laminating adhesion, so that the resultant composite electrode plate is of relatively high quality.

The laminating adhesion shown in FIG. 17 specifically means a peel force between the separator B and the electrode plate A per 20 mm.

With the above technical solution, the depth of the clearance groove 40 is made greater than 40 µm, so that the separator B is relatively capable of being laminated with the electrode plate A to form a composite electrode, that is, the separator B is relatively capable of being laminated, thereby endowing the composite electrode plate with relatively high quality.

In some embodiments, referring to FIG. 2, FIG. 3, FIG. 10, FIG. 17, and FIG. 19, the depth of the clearance groove 40 is greater than 100 µm.

As shown in FIG. 17, as can be seen from the relationship curve between the depth of the clearance groove 40 and the laminating adhesion of the separator B shown in the drawing, when the depth of the clearance groove 40 is greater than 100 µm, the laminating adhesion of the separator B basically fluctuates at the maximum value, indicating that the composite electrode plate compounded of the separator B and the electrode plate A is in a good state of firm bonding.

The above technical solution makes the depth of the clearance groove 40 greater than 100 µm, thereby leading the composite electrode plate to be in a good state of firm bonding, and in turn, meeting the quality requirement of the composite electrode plate.

In some other embodiments, both the first pressing piece 10 and the second pressing piece 20 are provided with the clearance groove 40, and a pressing position located on the target piece C and corresponding to the clearance groove 40 of the first pressing piece 10 is staggered from a pressing position located on the target piece C and corresponding to the clearance groove 40 of the second pressing piece 20.

Understandably, when the target piece C passes through the pressing clearance 30 to let the first pressing piece 10 and the second pressing piece 20 coordinate to press the target piece C, the part, sheltered by the clearance groove 40 of the first pressing piece 10, of the target piece C does not overlap the part sheltered by the clearance groove 40 of the second pressing piece 20. In other words, the clearance groove 40 of the first pressing piece 10 and the clearance groove 40 of the second pressing piece 20 provide clearances for different parts of the target piece C respectively.

For example, in some implementations, a plurality of clearance grooves 40 on the first pressing piece 10 may be divided into a plurality of rows of clearance grooves 40. The plurality of rows of clearance grooves 40 on the first pressing piece 10 are spaced apart on the first pressing piece 10 along the direction Y. A plurality of clearance grooves 40 on the second pressing piece 220 are divided into a plurality of rows of clearance grooves 40. The plurality of rows of clearance grooves 40 on the second pressing piece 20 are spaced apart on the second pressing piece 20 along the direction Y. When the first pressing piece 10 is in the shape of a roller, the plurality of clearance grooves 40 in each row of clearance grooves 40 of the first pressing piece 10 are distributed on the outer peripheral surface of the first pressing piece 10 along a circumferential direction. When the first surface 101 of the first pressing piece 10 is a flat surface, as shown in FIG. 8, the plurality of clearance grooves 40 in each row of clearance grooves 40 of the first pressing piece 10 are spaced apart on one side of the first pressing piece 10 along the direction X, the side being configured to press the target piece C. When the second pressing piece 20 is in the shape of a roller, the plurality of clearance grooves 40 in each row of clearance grooves 40 of the second pressing piece 20 are spaced apart on the outer peripheral surface of the second pressing piece 20 along a circumferential direction. When the second surface 201 of the second pressing piece 20 is a flat surface, as shown in FIG. 9, the plurality of clearance grooves 40 in each row of clearance grooves 40 of the second pressing piece 20 are spaced apart on one side of the second pressing piece 20 along the direction X, the side being configured to press the target piece C. Moreover, in the direction Y, each row of clearance grooves 40 of the first pressing piece 10 and each row of clearance grooves 40 of the second pressing piece 20 are alternately distributed in sequence. In this way, the clearance grooves 40 of the first pressing piece 10 are staggered from the clearance grooves 40 of the second pressing piece 20.

In addition, the plurality of clearance grooves 40 on the first pressing piece 10 and the plurality of clearance grooves 40 on the second pressing piece 20 may be distributed in other ways, as long as the clearance grooves 40 of the first pressing piece 10 are staggered from the clearance grooves 40 of the second pressing piece 20.

With the above technical solution, the clearance groove 40 of the first pressing piece 10 and the clearance groove 40 of the second pressing piece 20 can provide clearances for different parts of the target piece C respectively. In this way, when the clearance area percentage of the target piece C is predetermined, the number of the clearance grooves 40 on the first pressing piece 10 and the number of the clearance grooves 40 on the second pressing piece 20 can be reduced separately, thereby simplifying the manufacturing process of the first pressing piece 10 and the second pressing piece 20. In addition, by designing clearances on the first pressing piece 10 and the second pressing piece 20 simultaneously, the mass difference between the first pressing piece 10 and the second pressing piece 20 is prevented from being excessively large, or even the mass of the first pressing piece 10 is made identical to the mass of the second pressing piece 20, thereby making it convenient for the first pressing piece 10 and the second pressing piece 20 to jointly press the target piece C effectively and stably.

In some embodiments, referring to FIG. 2 to FIG. 5, the first pressing piece 10 and the second pressing piece 20 are both in the shape of a roller, that is, both are pressure rollers. Alternatively, in some other embodiments, as shown in FIG. 7, only the first pressing piece 10 is a pressure roller. Alternatively, in some other embodiments, only the second pressing piece 20 is a pressure roller. The pressure roller can rotate around a rotation axis of the roller. The outer peripheral surface of the pressure roller is provided with the clearance groove 40.

The pressure roller is a roller-shaped structure, and is a columnar structure.

With the above technical solution, when at least one of the first pressing piece 10 or the second pressing piece 20 is a pressure roller, the pressure roller can press the target piece C through the outer peripheral surface of the roller when the target piece C passes through the pressing clearance 30, and can adapt to the conveyance of the target piece C by rotating, and can even roll and convey the target piece C by rotating. In this way, the above technical solution achieves a desired rolling effect for the target piece C, and enables the target piece C to be rolled by the first pressing piece 10 and the second pressing piece 20 while being conveyed, so that the efficiency of the pressing apparatus 100 in rolling the target piece C is relatively high.

In some embodiments, referring to FIG. 2, FIG. 5, and FIG. 18, the pressing apparatus 100 further includes a cleaning assembly 50. The cleaning assembly 50 is configured to clean the pressure roller.

The cleaning assembly 50 means an assembly capable of cleaning the pressure roller. The specific structure of the cleaning assembly 50 can be learned by referring to the description of each embodiment below, and is not described in detail here.

It is hereby noted that, in some circumstances, when the pressing apparatus 100 is in use, residues such as dust are prone to remain on the surface of the pressure roller. In addition, because the pressure roller is provided with a clearance groove 40, residues such as dust are also prone to remain in the clearance groove 40 during the use of the pressing apparatus 100. When the pressure roller rolls the target piece C, the residues are prone to fall out onto the target piece C, inevitably posing a risk that the residues damage the target piece C.

With the above technical solution, the cleaning assembly 50 cleans the pressure roller, and can clean off the residues on the pressure roller, thereby alleviating the problem that the residues left when the pressure roller rolls the target piece C cause damage to the target piece C.

In some embodiments, referring to FIG. 2, FIG. 5, and FIG. 18, the cleaning assembly 50 includes a dust suction box 52 and a sweeping piece 51. The dust suction box 52 is provided with a receptacle 521, a dust suction bin 522, and a dust suction port 523. The dust suction port 523 communicates with the receptacle 521 and the dust suction bin 522. The sweeping piece 51 is mounted in the receptacle 521. A part of the sweeping piece 51 is exposed outside the receptacle 521 and is able to elastically abut against and frictionally contact the outer peripheral surface of the pressure roller when the pressure roller rotates. The dust suction box 52 is configured to be connected to an external air drawing apparatus to allow a residue on the sweeping piece 51 to enter the dust suction bin 522 through the dust suction port 523 under an action of the air drawing apparatus.

The sweeping piece 51 is a component that is elastic to some extent. In this way, the sweeping piece 51 can elastically abut against the outer peripheral surface of the pressure roller to extend into the clearance groove 40 of the pressure roller. When the pressure roller rotates, the pressure roller can move relative to the sweeping piece 51, so that the sweeping piece 51 can be smoothly in frictional contact with the outer peripheral surface of the pressure roller by virtue of elasticity, and clean off the residues in the clearance groove 40 and on the surface of the pressure roller through the elastic force of the sweeping piece 51 that abuts against the pressure roller. For example, the sweeping piece 51 may be a brush. The brush is a flexible piece made of soft bristles and is relatively tough, and can clean off residues conveniently. For another example, the sweeping piece 51 may be, but is not limited to, a component such as a feather duster that serves a cleaning function by virtue of elasticity.

As shown in FIG. 18, the dust suction port 523 is created on a wall of the receptacle 521 and penetrates through the wall of the receptacle 521, so that the dust suction port 523 communicates to the dust suction bin 522 and the receptacle 521.

As shown in FIG. 2, FIG. 5, and FIG. 18, the receptacle 521 is provided with an opening. The opening of the receptacle 521 directly faces the pressure roller. The sweeping piece 51 is mounted in the receptacle 521. A part of the sweeping piece 51 is exposed outside the receptacle 521 through the opening, so that the sweeping piece 51 can elastically abut against the outer peripheral surface of the pressure roller through the opening of the receptacle 521. When the pressure roller rotates, the pressure roller can move relative to the sweeping piece 51. In this way, the outer peripheral surface of the pressure roller is in frictional contact with the sweeping piece 51, so that the sweeping piece 51 can clean off the residues on the pressure roller.

The air drawing apparatus means an apparatus possessing a suction force and capable of drawing air. The air drawing apparatus is connected to the dust suction box 52 and communicates with the dust suction bin 522. The air drawing apparatus may be, but is not limited to, an exhaust fan, a vacuum cleaner, or the like.

Based on the above structure, during rotation of the pressure roller, the pressure roller moves relative to the sweeping piece 51. The outer peripheral surface of the pressure roller elastically abuts against and frictionally contacts the sweeping piece 51, so that the sweeping piece 51 can clean off the residues from the pressure roller. At the same time, the air drawing apparatus is turned on to draw air, so that the air at the pressure roller flows along the receptacle 521, the dust suction port 523, and the dust suction bin 522 in sequence. In this way, the residues cleaned off by the sweeping piece 51 passes through the receptacle 521 and the dust suction port 523 in sequence under the drawing action of the air drawing apparatus and enters the dust suction bin 522. Definitely, with the air drawing apparatus in use, the air drawing apparatus can also allow the residues to enter the air drawing apparatus through the receptacle 521, the dust suction port 523, and the dust suction bin 522 in sequence.

The opening of the receptacle 521 is created on one side of the receptacle 521, the side facing away from the dust collecting bin 522. The air drawing apparatus communicates to one end of the dust collecting bin 522, the end facing away from the receptacle 521. In this way, the air can conveniently flow along the receptacle 521, the dust suction port 523, and the dust suction bin 522 in sequence; and the residues cleaned off by the sweeping piece 51 can conveniently pass through the receptacle 521, the dust suction port 523, and the dust suction bin 522 in sequence.

With the above technical solution, when the pressure roller presses the target piece C, the sweeping piece 51 sweeps the residue off the pressure roller, and the air drawing apparatus can draw the residues swept off by the sweeping piece 51 into the dust suction bin 522 or the air drawing apparatus, thereby implementing real-time cleaning of the pressure roller to alleviate the problem that the residues cause damage to the target piece C.

In some other embodiments, the cleaning assembly may include an air drawing apparatus alone. In other words, the air drawing apparatus directly draws the residues from the pressure roller to clean the pressure roller. However, in the preceding embodiment, the sweeping piece 51 can be in frictional contact with the pressure roller, and the sweeping piece 51 can move relative to the pressure roller during the rotation of the pressure roller to clean off the residues from the pressure roller, thereby facilitating the air drawing apparatus to draw off the residues and cleaning the pressure roller more vigorously.

In some embodiments, referring to FIG. 2, FIG. 5, and FIG. 18, the sweeping piece 51 is rotatable. The rotation axis of the sweeping piece 51 is parallel to the rotation axis of the pressure roller.

The sweeping piece 51 is connected to an external driving apparatus. The external driving apparatus can drive the sweeping piece 51 to rotate around the rotation axis of the sweeping piece 51.

The sweeping piece 51 is rotatably connected to the dust suction box 52. In addition, the sweeping piece 51 is also rotatably connected to an external rack, so as to be rotatable relative to the dust suction box 52.

In some implementations, the rotation direction of the sweeping piece 51 is identical to the rotation direction of the pressure roller. In this way, the part, in contact with the pressure roller, of the sweeping piece 51 can move relative to the part, in contact with the sweeping piece 51, of the pressure roller. In other words, the sweeping piece 51 can rotate relative to the pressure roller, so that the sweeping piece 51 can clean off the residues from the pressure roller. In some other implementations, the rotation direction of the sweeping piece 51 is identical to the rotation direction of the pressure roller, and the rotating linear velocity of the sweeping piece 51 is different from the rotating linear velocity of the pressure roller. In this way, the part, in contact with the pressure roller, of the sweeping piece 51 can move relative to the part, in contact with the sweeping piece 51, of the pressure roller. In other words, the sweeping piece 51 can rotate relative to the pressure roller, so that the sweeping piece 51 can clean off the residues from the pressure roller.

The rotation axis of the sweeping piece 51 is parallel to the rotation axis of the pressure roller, so that the outer peripheral surface of the sweeping piece 51 can contact the outer peripheral surface of the pressure roller. On this basis, after the sweeping piece 51 rotates relative to the pressure roller, the outer peripheral surface of the sweeping piece 51 can still contact the outer peripheral surface of the pressure roller, thereby enabling the sweeping piece 51 to keep elastically abutting against and frictionally contacting the pressure roller, and cleaning the pressure roller effectively.

With the above technical solution, the sweeping piece 51 can rotate relative to the pressure roller, and the rotation axis of the sweeping piece 51 is parallel to the rotation axis of the pressure roller. In this way, the sweeping piece 51 can elastically abut against and frictionally contact different positions on the outer peripheral surface of the pressure roller in sequence to sweep the residues off the pressure roller.

In some other embodiments, the sweeping piece 51 may be fixed relative to the dust suction box 52 instead. In this way, when the pressure roller rotates, the pressure roller moves relative to the dust suction box 52, and then the pressure roller also moves relative to the sweeping piece 51, so that the sweeping piece 51 can clean the pressure roller through the relative movement between the pressure roller and the sweeping piece 51.

In some embodiments, as shown in FIG. 2, FIG. 5, and FIG. 18, the sweeping piece 51 includes a rotation body 511 and an elastic piece 512. The elastic piece 512 is disposed on the outer peripheral surface of the rotation body 511. When in use, the sweeping piece 51 elastically abuts against and frictionally contacts the outer peripheral surface of the pressure roller through the elastic piece 512. In this way, when the sweeping piece 51 rotates relative to the pressure roller, the elastic piece 512 cleans off the residues from the pressure roller. In this process, the rotation body 511 can rotate to drive the elastic piece 512 to rotate together. In this way, the sweeping piece 51 is endowed with the features of being able to elastically abut against and frictionally contact the pressure roller and being rotatable.

In some implementations, the elastic piece 512 may be a strip of plastic, such as bristles on a brush, and is of some elasticity and toughness. In some other implementations, the elastic piece 512 may be bristles on a feather duster. In some other implementations, the elastic piece 512 may be a strip structure made of bamboo. In the above scenarios, the number of elastic pieces 512 is plural. In some other implementations, the elastic piece 512 may be a wire wrapped on the outer periphery of the rotation body 511, such as a plastic wire. In this case, the number of wires may be one or more. The elastic piece 512 may be in various forms that are not enumerated here one by one.

In some embodiments, referring to FIG. 2, FIG. 5, and FIG. 18, the cleaning assembly 50 further includes a scraper 53. The scraper 53 is disposed in the receptacle 521. The scraper 53 is configured to scrape the residue off the sweeping piece 51 when the sweeping piece 51 rotates.

The scraper 53 may be in the shape of a strip, a sheet, or the like.

As shown in FIG. 18, the scraper 53 is disposed in the receptacle 521 and fixed relative to the dust suction box 52. At least a part of the scraper 53 extends into the sweeping piece 51. For example, the scraper 53 extends between a plurality of elastic pieces 512. "At least a part of the scraper 53 extends into the sweeping piece 51" may be: a part of the sweeping piece 51 extends into the sweeping piece 51, or the entirety of the sweeping piece 51 extends into the sweeping piece 51.

When the sweeping piece 51 rotates to clean the residues, the residues may remain on the sweeping piece 51. For example, the residues may remain between one elastic piece 512 and another elastic piece 512. When the pressure roller presses the target piece C and when the sweeping piece 51 cleans off the residues from the pressure roller, if the residues also remain on the sweeping piece 51, the residues on the sweeping piece 51 may fall back onto the pressure roller, thereby damaging the target piece C.

During the rotation of the sweeping piece 51, the sweeping piece 51 rotates relative to the dust suction box 52. At this time, the scraper 53 is fixed relative to the dust suction box 52, so that the sweeping piece 51 moves relative to the scraper 53. In this way, the elastic piece 512 on the sweeping piece 51 can also deform elastically under the action of the scraper 53, so that the residues between one elastic piece 512 and another elastic piece 512 drop out. In other words, during the rotation of the sweeping piece 51, the sweeping piece 51 moves relative to the scraper 53, and the scraper 53 scrapes and moves the elastic part on the sweeping piece 51, thereby scraping off the residues from the sweeping piece 51 and removing the residues away from the sweeping piece 51. At this time, because the air drawing apparatus is drawing air, the residues scraped off by the scraper 53 can be drawn into the dust suction bin 522 or the air drawing apparatus, thereby cleaning the sweeping piece 51 effectively.

With the above technical solution, during the rotation of the sweeping piece 51, the sweeping piece 51 moves relative to the scraper 53. In this way, the scraper 53 can scrape the residues off the sweeping piece 51, thereby alleviating the problem that the residues on the sweeping piece 51 cause damage to the target piece C when the pressure roller rolls the target piece C.

In some embodiments, referring to FIG. 2 to FIG. 5, the pressing apparatus 100 further includes a dust sticking assembly 60. The dust sticking assembly 60 includes a first dust sticking roller 61. The first dust sticking roller 61 is rotatable. A rotation axis of the first dust sticking roller 61 is parallel to the rotation axis of the pressure roller. An outer peripheral surface of the first dust sticking roller 61 contacts the outer peripheral surface of the pressure roller and is able to stick to and remove a residue from the pressure roller during rotation.

The first dust sticking roller 61 is in the shape of a roller, and the first dust sticking roller 61 can rotate around a rotation axis of the roller.

The outer peripheral surface of the first dust sticking roller 61 is sticky. For example, a sticky coating may be provided on the outer peripheral surface of the first dust sticking roller 61, or a sticky structure may be provided on the outer peripheral surface of the first dust sticking roller 61. All such arrangements can make the outer peripheral surface of the first dust sticking roller 61 sticky.

When the pressure roller rotates, because the outer peripheral surface of the first dust sticking roller 61 is in contact with the outer peripheral surface of the pressure roller, due to the stickiness of the outer peripheral surface of the first dust sticking roller 61, the pressure roller can drive the first dust sticking roller 61 to rotate when rotating, and the rotation direction of the first dust sticking roller 61 is made to be opposite to that of the pressure roller. In addition, the first dust sticking roller 61 can also rotate as driven by an external force, and the rotation direction of the first dust sticking roller 61 is opposite to that of the pressure roller. In this case, because the rotation direction of the pressure roller is opposite to that of the first dust sticking roller 61, all positions on the outer peripheral surface of the first dust sticking roller 61 can well contact the corresponding positions on the outer peripheral surface of the pressure roller, thereby sticking to the positions on the outer peripheral surface of the pressure roller to remove the residues from the pressure roller.

With the above technical solution, the first dust sticking roller 61 can rotate in an opposite direction to the pressure roller, so as to stick to and remove the residue on the pressure roller, and in turn, alleviate the problem that the residues on the pressure roller cause damage to the target piece C.

In some embodiments, referring to FIG. 2 to FIG. 5, the dust sticking assembly 60 further includes a second dust sticking roller 62. A rotation axis of the second dust sticking roller 62 is parallel to the rotation axis of the first dust sticking roller 61. An outer peripheral surface of the second dust sticking roller 62 contacts the outer peripheral surface of the first dust sticking roller 61 and is able to stick to and remove the residue from the first dust sticking roller 61 during rotation.

The second dust sticking roller 62 is in the shape of a roller, and the second dust sticking roller 62 can rotate around a rotation axis of the roller.

The outer peripheral surface of the second dust sticking roller 62 is sticky. For example, a sticky coating may be provided on the outer peripheral surface of the second dust sticking roller 62, or a sticky structure may be provided on the outer peripheral surface of the second dust sticking roller 62. All such arrangements can make the outer peripheral surface of the first dust sticking roller 61 sticky.

When the pressure roller rotates, because the outer peripheral surface of the second dust sticking roller 62 is in contact with the outer peripheral surface of the first dust sticking roller 61, due to the stickiness of the outer peripheral surface of the second dust sticking roller 62, the first dust sticking roller 61 can drive the second dust sticking roller 62 to rotate when rotating, and the rotation direction of the second dust sticking roller 62 is made to be opposite to that of the pressure roller. In addition, the second dust sticking roller 62 can also rotate as driven by an external force, and the rotation direction of the second dust sticking roller 62 is opposite to that of the first dust sticking roller 61. In this case, because the rotation direction of the first dust sticking roller 61 is opposite to that of the second dust sticking roller 62, all positions on the outer peripheral surface of the second dust sticking roller 62 can well contact the corresponding positions on the outer peripheral surface of the first dust sticking roller 61, thereby sticking to the positions on the outer peripheral surface of the first dust sticking roller 61 to remove the residues from the first dust sticking roller 61.

With the above technical solution, the second dust sticking roller 62 can stick to and remove the residue on the outer peripheral surface of the first dust sticking roller 61, thereby making it convenient for the first dust sticking roller 61 to continuously remove the residues on the outer peripheral surface of the pressure roller effectively.

In some embodiments, referring to FIG. 2, FIG. 4, and FIG. 5, the dust sticking assembly 60 and the cleaning assembly 50 are sequentially distributed along the rotation path of the pressure roller.

As shown in the drawing, both the dust sticking assembly 60 and the cleaning assembly 50 are disposed on the outer peripheral side of the pressure roller. The dust sticking assembly 60 and the cleaning assembly 50 are sequentially distributed along the rotation path of the rotating pressure roller, and therefore, when the pressure roller rolls the target piece C, all positions on the pressure roller pass through the dust sticking assembly 60 first, so that the residues on the surface of the pressure roller are stuck and removed by the dust sticking assembly 60 first. Subsequently, all positions on the pressure roller pass through the cleaning assembly 50, so that the residues in the clearance grooves 40 of the pressure roller and on the surface of the pressure roller are cleaned off by the cleaning assembly 50, and then sucked away by the air drawing apparatus.

The above technical solution improves the effect of cleaning the pressure roller, and alleviates the problem that the target piece C is damaged by the residues on the pressure roller.

Referring to FIG. 2 to FIG. 5, FIG. 19, and FIG. 20, a second aspect of this application provides a piece of electrode plate processing equipment 1000. The electrode plate processing equipment 1000 includes the pressing apparatus 100. The pressing apparatus 100 is configured to press an electrode plate A and a separator B. The pressing apparatus 100 in this embodiment is identical to the pressing apparatus 100 mentioned in the above embodiments, the details of which are omitted here and may be learned by reference.

Understandably, in this embodiment, the electrode plate A and the separator B may be equivalent to the target piece C mentioned in the above embodiments. The electrode plate processing equipment 1000 is mainly configured to process the electrode plate A and the separator B.

In some embodiments, as shown in FIG. 19, after the electrode plate A and the separator B are pressed to form a composite electrode plate, the composite electrode plate is shaped to form an electrode assembly by stacking. For the electrode plate A and the separator B to be pressed, the separators B are stacked on both sides of a first electrode plate A1 first, and then second electrode plates A2 are stacked on the separators B on both sides of the first electrode plate A1. The second electrode plates A2 on the two sides of the first electrode plate A1 are staggered in sequence. For details, reference may be made to the distribution of the first electrode plate A1, the second electrode plate A2, and the separator B in FIG. 1. In this way, after the pressing apparatus 100 presses the first electrode plate A1, the second electrode plate A2, and the separator B, among a plurality of second electrode plates A2 located on the same side of the first electrode plate A1, the separators B are exposed at a position between any two adjacent second electrode plates A2. In this way, in the process of shaping, by means of stacking, the composite electrode plate compounded of the electrode plate A and the separator B to form an electrode assembly, all the exposed parts of the separator B can be stacked on and bonded to the adjacent second electrode plate A2, so that the electrode assembly is in a good state of firm bonding.

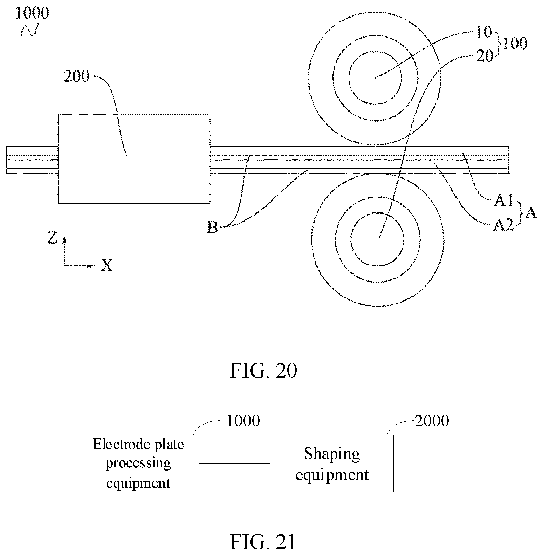

In some other embodiments, as shown in FIG. 20, after the electrode plate A and the separator B are pressed to form a composite electrode plate, the composite electrode plate is shaped to form an electrode assembly by winding. The electrode plate A and the separator B to be pressed may be stacked up along the distribution direction of the first electrode plate A1, the separator B, the second electrode plate A2, and the separator B in sequence. In the above process, the number of the first electrode plates A1, the number of the second electrode plates A2, and the number of the separators B are not limited, as long as at least one of the two sides of the stacked structure in the thickness direction is provided with the separator B, and the separator B on this side is referred to as an outermost separator B. In this way, when the pressing apparatus 100 presses the electrode plate A and the separator B, the separator B is partially sheltered in a clearance, so that the outermost separator B is also partially sheltered in a clearance. In this way, in the process of shaping, by means of winding, the composite electrode plate compounded of the electrode plate A and the separator B to form an electrode assembly, the outermost separator B can be bonded to the electrode plate A by virtue of the adhesion of the outermost separator B, so that the electrode assembly is in a good state of firm bonding.

Understandably, when the pressing apparatus 100 is configured to press the electrode plate A and the separator B, the electrode plates A and the separators B may be distributed in other manners different from the above two distribution manners.

With the above technical solution, when the pressing apparatus 100 presses the electrode plate A and the separator B to form a composite electrode plate, the clearance groove 40 of the pressing apparatus 100 can provide a clearance for a part of the separator B, thereby alleviating the damage caused to the separator B by the pressing apparatus 100. In this way, when the separator B is subjected to a pressing action, the sheltered parts of the separator B can retain adhesion and serve a sticking function in the subsequent shaping operation, thereby alleviating the problem of inferior adhesion of the electrode assembly, and improving the quality of the electrode assembly.

In some embodiments, referring to FIG. 2, FIG. 19, and FIG. 20, the electrode plate processing equipment 1000 further includes a heating apparatus 200. The heating apparatus 200 is configured to heat the electrode plate A and the separator B. The pressing apparatus 100 is configured to press the heated electrode plate A and separator B.

The heating apparatus 200 means an apparatus that can emit heat to perform heating. For example, the heating apparatus 200 may be an electric heating wire, or an apparatus that performs heating by generating an open flame.

The heating apparatus 200 and the pressing apparatus 100 are sequentially distributed along the conveyance direction of the electrode A and the separator B. The conveyance direction of the separator B is the direction X shown in FIG. 19 and FIG. 20.

As shown in FIG. 19, in this embodiment, after the separator B and the electrode plate A form a composite electrode plate, the composite electrode plate is shaped to form an electrode assembly primarily by stacking. After the separators B are stacked on both sides of the first electrode plate A1, the first electrode plate A1 and the separators B are conveyed along the direction X. In the conveyance direction of the first electrode plate A1 and the separators B, the first electrode plate A1 and the separators B pass through the heating apparatus 200 first. The heating apparatus 200 emits heat, so that the first electrode plate A1 and the separators B are under high-temperature conditions. Subsequently, the second electrode plates A2 are stacked on the separators B on both sides of the first electrode plate A1. The second electrode plates A2 on the two sides of the first electrode plate A1 are staggered, and the entirety formed by the first electrode plate A1, the second electrode plates A2, and the separators B passes through the pressing clearance 30 of the pressing apparatus 100. The separators B are bonded to the first electrode plate A1 and the second electrode plates A2 under high-temperature conditions, so as to be laminated with the first electrode plate A1 and the second electrode plates A2 to form a composite electrode plate that is to be shaped by stacking.

As shown in FIG. 20, after the separator B and the electrode plate A form a composite electrode plate, the composite electrode plate is shaped to form an electrode assembly primarily by winding. The electrode plate A and the separator B to be wound are stacked and then conveyed along the direction X, and then sequentially pass through the heating apparatus 200 and the pressing apparatus 100. When the electrode plate A and the separator B pass through the heating apparatus 200, the separator B is under high-temperature conditions. When the electrode plate A and the separator B enter the pressing apparatus 100, the separator B and the electrode plate A are pressed by the pressing apparatus 100 and bonded together under high-temperature conditions to form a composite electrode plate that is to be shaped by winding.

With the above technical solution, the electrode plate A and the separator B are heated first by the heating apparatus 200 and then partially pressed by the pressing apparatus 100, so that the electrode plate and the separator can be laminated to form a composite electrode plate, and the composite electrode plate is in a good state of firm bonding.

Referring to FIG. 2 and FIG. 19 to FIG. 21, a third aspect of this application provides a piece of battery processing equipment. The battery processing equipment includes the electrode plate processing equipment 1000 and a piece of shaping equipment 2000. The electrode plate processing equipment 1000 is configured to press an electrode plate A and a separator B to form a composite electrode plate. The shaping equipment 2000 is configured to shape the composite electrode plate to form an electrode assembly. The electrode plate processing equipment 1000 according to this embodiment is identical to the electrode plate processing equipment 1000 mentioned in the above embodiments, the details of which are omitted here and may be learned by reference.

The shaping equipment 2000 is equipment configured to shape the composite electrode plate to form an electrode assembly.

Specifically, when the electrode plate processing equipment 1000 presses the electrode plate A and the separator B to laminate the electrode plate A and the separator B to form a composite electrode plate that is to be shaped by stacking, the shaping equipment 2000 is equipment configured to stack the electrode plate A and the separator B. When the electrode plate processing equipment 1000 presses the electrode plate A and the separator B to laminate the electrode plate A and the separator B to form a composite electrode plate that is to be shaped by winding, the shaping equipment 2000 is equipment configured to wind the composite electrode plate.

The electrode assembly is a component that reacts electrochemically in a battery, and is primarily formed by shaping the electrode plate A and the separator B. The electrode plates A mentioned in the above and following embodiments may be the first electrode plate A1 or the second electrode plate A2. The first electrode plate A1 and the second electrode plate A2 may be a positive electrode plate A and a negative electrode plate A respectively, or may be a negative electrode plate A and a positive electrode plate A respectively.

In addition, the battery processing equipment may further include a piece of assembling equipment configured to fit an electrode assembly into a housing to form a battery, where the electrode assembly is formed by the shaping equipment 2000 through shaping.

With the above technical solution, when the pressing apparatus 100 presses the electrode plate A and the separator B to form a composite electrode plate, the clearance groove 40 of the pressing apparatus 100 can provide a clearance for a part of the separator B, thereby alleviating the damage caused to the separator B by the pressing apparatus 100. In this way, when the separator B is subjected to a pressing action, the sheltered parts of the separator B can retain adhesion and serve a sticking function in the shaping operation, thereby alleviating the problem of inferior adhesion of the electrode assembly, and improving the quality of the electrode assembly.

What is described above is merely optional embodiments of this application, but not intended to limit this application. To a person skilled in the art, various modifications and variations may be made to this application. Any modifications, equivalent replacements, improvements, and the like made without departing from the spirit and principles of this application still fall within the protection scope of claims of this application.

## Claims

1. A pressing apparatus (100), comprising:
a first pressing piece (10) with a first surface (101); and
a second pressing piece (20) with a second surface (201), wherein the first surface (101) and the second surface (201) are configured to coordinate to press a target piece (C), and the first surface and/or the second surface are provided with a clearance groove (40).

2. The pressing piece (100) according to claim 1, wherein the first surface (101) is a flat surface or a cylindrical surface, and the second surface (201) is a flat surface or a cylindrical surface.

3. The pressing apparatus (100) according to claim 1 or 2, wherein a groove wall of the clearance groove (40) transitions to the first surface (101) by way of a circular arc, and/or a groove wall of the clearance groove (40) transitions to the second surface (201) by way of a circular arc (402).

4. The pressing apparatus (100) according to any one of claims 1 to 3, wherein the first surface (101) is provided with a plurality of the clearance grooves (40) spaced apart, and/or the second surface (201) is provided with a plurality of the clearance grooves (40) spaced apart.

5. The pressing apparatus (100) according to claim 4, wherein the plurality of clearance grooves (40) on the first surface (101) and/or the second surface (201) are evenly distributed.

6. The pressing apparatus (100) according to claim 4 or 5, wherein center points of the plurality of clearance grooves (40) on the first surface (101) and/or the second surface (201) are connectible to form a grid structure (D), and a minimum grid cell (D1) of the grid structure (D) is an equilateral triangle.

7. The pressing apparatus (100) according to any one of claims 1 to 6, wherein the clearance groove (40) comprises a plurality of first grooves (401) and a plurality of second grooves (403), and two adjacent first grooves (401) communicate with each other through the second groove (403).

8. The pressing apparatus (100) according to any one of claims 1 to 7, wherein a contour of the clearance groove (40) on the first surface (101) and/or the second surface (201) is circular, elliptical, or square.

9. The pressing apparatus (100) according to any one of claims 1 to 8, wherein the clearance groove (40) satisfies: a ratio of an area of a part, directly facing the clearance groove (40), of the target piece (C) to an area of the target piece (C) falls within a range of 30% to 40%.

10. The pressing apparatus (100) according to any one of claims 1 to 9, wherein the clearance groove (40) is disposed on the first surface (101), and a ratio of a first area of the clearance groove (40) on the first surface (101) to a second area falls within a range of 30% to 40%, wherein the second area is a sum of the first area and an area of the first surface (101).

11. The pressing apparatus (100) according to any one of claims 1 to 10, wherein a depth of the clearance groove (40) is greater than 40 µm.

12. The pressing apparatus (100) according to any one of claims 1 to 11, wherein a depth of the clearance groove (40) is greater than 100 µm.

13. The pressing apparatus (100) according to any one of claims 1 to 12, wherein both the first pressing piece (10) and the second pressing piece (20) are provided with the clearance groove (40), and a pressing position located on the target piece (C) and corresponding to the clearance groove (40) of the first pressing piece (10) is staggered from a pressing position located on the target piece (C) and corresponding to the clearance groove (40) of the second pressing piece (20).

14. The pressing apparatus (100) according to any one of claims 1 to 13, wherein the first pressing piece (10) and/or the second pressing piece (20) is a pressure roller rotatable around a rotation axis of the roller, and an outer peripheral surface of the pressure roller is provided with the clearance groove (40).

15. The pressing apparatus (100) according to claim 14, wherein the pressing apparatus (100) further comprises a cleaning assembly (50), and the cleaning assembly (50) is configured to clean the pressure roller.

16. The pressing apparatus (100) according to claim 15, wherein the cleaning assembly (50) comprises:
a dust suction box (52), provided with a receptacle (521), a dust suction bin (522), and a dust suction port (523) communicating with the receptacle (521) and the dust suction bin (522); and
a sweeping piece (51), mounted in the receptacle (521), wherein a part of the sweeping piece (51) is exposed outside the receptacle (521) and is able to elastically abut against and frictionally contact the outer peripheral surface of the pressure roller when the pressure roller rotates, wherein
the dust suction box (52) is configured to be connected to an external air drawing apparatus to allow a residue on the sweeping piece (51) to enter the dust suction bin (522) through the dust suction port (523) under an action of the air drawing apparatus.

17. The pressing apparatus (100) according to claim 16, wherein the sweeping piece (51) is rotatable, and a rotation axis of the sweeping piece (51) is parallel to the rotation axis of the pressure roller.

18. The pressing apparatus (100) according to claim 17, wherein the cleaning assembly (50) further comprises a scraper (53) disposed in the receptacle (521), and the scraper (53) is configured to scrape the residue off the sweeping piece (51) when the sweeping piece (51) rotates.

19. The pressing apparatus (100) according to any one of claims 14 to 18, wherein the pressing apparatus (100) further comprises a dust sticking assembly (60), the dust sticking assembly (60) comprises a rotatable first dust sticking roller (61), a rotation axis of the first dust sticking roller (61) is parallel to the rotation axis of the pressure roller, and an outer peripheral surface of the first dust sticking roller (61) contacts the outer peripheral surface of the pressure roller and is able to stick to and remove a residue from the pressure roller during rotation.

20. The pressing apparatus (100) according to claim 19, wherein the dust sticking assembly (60) further comprises a rotatable second dust sticking roller (62), a rotation axis of the second dust sticking roller (62) is parallel to the rotation axis of the first dust sticking roller (61), and an outer peripheral surface of the second dust sticking roller (62) contacts the outer peripheral surface of the first dust sticking roller (61) and is able to stick to and remove the residue from the first dust sticking roller (61) during rotation.

21. The pressing apparatus (100) according to claim 20, wherein the pressing apparatus (100) comprises a cleaning assembly (50), the cleaning assembly (50) is configured to clean the pressure roller, and the dust sticking assembly (60) and the cleaning assembly (50) are distributed in sequence along a rotation path of the pressure roller.

22. A piece of electrode plate processing equipment (1000), wherein the equipment comprises the pressing apparatus (100) according to any one of claims 1 to 21, and the pressing apparatus (100) is configured to press an electrode plate (A) and a separator (B).

23. The electrode plate processing equipment (1000) according to claim 22, wherein the electrode plate processing equipment (1000) further comprises a heating apparatus (200), the heating apparatus (200) is configured to heat the electrode plate (A) and the separator (B), and the pressing apparatus (100) is configured to press the heated electrode plate (A) and separator (B).

24. A piece of battery processing equipment, wherein the equipment comprises:
the electrode plate processing equipment (1000) according to claim 22 or 23, configured to press an electrode plate (C) and the separator (B) to form a composite electrode plate; and
shaping equipment (2000), configured to shape the composite electrode plate to form an electrode assembly.
